(19) Europäisches Patentamt
European Patent Office
Office européen des brevets

(11) EP 3 348 579 A1

(12) **EUROPEAN PATENT APPLICATION**
published in accordance with Art. 153(4) EPC

(43) Date of publication:
**18.07.2018 Bulletin 2018/29**

(21) Application number: **16844311.7**

(22) Date of filing: **05.09.2016**

(51) Int Cl.:
***C08B 11/08*** *(2006.01)*

(86) International application number:
**PCT/JP2016/076053**

(87) International publication number:
**WO 2017/043450 (16.03.2017 Gazette 2017/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.09.2015 JP 2015176045**

(71) Applicant: **Kao Corporation**
**Chuo-ku**
**Tokyo 103-8210 (JP)**

(72) Inventors:
- **YOSHIDA, Yutaka**
  **Wakayama-shi, Wakayama 640-8580 (JP)**
- **SHIBATA, Shotaro**
  **Wakayama-shi, Wakayama 640-8580 (JP)**
- **KUMAMOTO, Yoshiaki**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **MODIFIED CELLULOSE FIBER**

(57) Modified cellulose fibers having an average fiber size of 5 μm or more, wherein one or more substituents selected from substituents represented by the following general formulas (1) and (2): $-CH_2-CH(OH)-R_1$ (1); $-CH_2-CH(OH)-CH_2-(OA)_n-O-R_1$ (2); wherein each $R_1$ in the general formulas (1) and (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, are bonded to cellulose fibers via an ether bond, wherein the modified cellulose fibers have a cellulose I crystal structure. The modified cellulose fibers of the present invention have high dispersibility in the resin and can exhibit an effect of increasing strength, so that the modified cellulose fibers are suitable as various fillers, and the like, and the resin composition blended with the modified cellulose fibers can be suitably used in daily sundries, household electric appliance parts, wrapping materials for household electric appliance parts, automobile parts, resins for three-dimensional modeling, and the like.



Printed by Jouve, 75001 PARIS (FR)

## Description

### FIELD OF THE INVENTION

The present invention relates to modified cellulose fibers. More specifically, the present invention relates to modified cellulose fibers which can be suitably blended as fillers in daily sundries, household electric appliance parts, automobile parts, resins for three-dimensional modeling, and the like, and a method for producing the modified cellulose fibers.

### BACKGROUND OF THE INVENTION

Conventionally, plastic materials derived from limited resource petroleum have been widely used; however, in the recent years, techniques with less burdens on the environment have been spotlighted. In view of the technical background, materials using cellulose fibers, which are biomass existing in large amounts in nature have been remarked.

For example, Patent Publication 1 discloses cellulose microfibrils having a modified surface, characterized in that a hydroxyl functional group existing on a surface of the microfibrils is etherified with at least one of an organic compound capable of reacting with the hydroxyl functional group, wherein the degree of substitution of surface (DSS) during etherification is at least 0.05. The publication describes that the microfibrils evenly disperse in an elastomeric composition to show excellent mechanical strength.

Patent Publication 2 discloses cellulose microfibers of which surface is replaced with an ether group having a degree of substitution of surface (DSS) of at least 0.05.

Patent Publication 3 discloses a method for obtaining a modified cellulose fiber dispersion including modifying cellulose before defibriation obtained from wood with an aromatic ring-containing substituent, and then subjecting the cellulose to defibriation to an average fiber size of 100 nm or less, as a cellulose composite material having excellent transparency, non-coloration, low-linear coefficient of expansion, and high Young's modulus, which is suitably used in the preparation of a cellulose fiber sheet.

Patent Publication 4 discloses a fine cellulose composite in which a surfactant is adsorbed to fine cellulose fibers having a carboxyl group content of from 0.1 to 3 mmol/g as fine cellulose fibers having excellent dispersion stability in an organic solvent.

Patent Publication 5 discloses a method for finely fibrillating cellulose, characterized by adding a polysaccharide to a dispersion medium containing an organic solvent and a modifier unreactive with the organic solvent to finely fibrillate cellulose. Here, the modifier includes acid anhydrides, acid halides, isocyanates, and silane coupling agents.

Patent Publication 1: Japanese Unexamined Patent Publication No. 2002-524618
Patent Publication 2: FR2800378 Publication
Patent Publication 3: Japanese Patent Laid-Open No. 2011-16995
Patent Publication 4: Japanese Patent Laid-Open No. 2011-140738
Patent Publication 5: Japanese Patent Laid-Open No. 2009-261993

### SUMMARY OF THE INVENTION

The present invention relates to the following [1] to [2]:

[1] Modified cellulose fibers having an average fiber size of 5 μm or more, wherein one or more substituents selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \qquad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
are bonded to cellulose fibers via an ether bond, wherein the modified cellulose fibers have a cellulose I crystal structure.

[2] A method for producing modified cellulose fibers, the modified cellulose fibers having an average fiber size of 5 μm or more, wherein one or more substituents selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
are bonded to cellulose fibers via an ether bond, wherein the modified cellulose fibers have a cellulose I crystal structure,
characterized in that the method includes introducing one or more compounds selected from nonionic alkylene oxide compounds having a total number of carbon atoms of 5 or more and 32 or less per molecule and nonionic glycidyl ether compounds having a total number of carbon atoms of 5 or more and 100 or less per molecule to a cellulose-based raw material having an average fiber size of 5 μm or more via an ether bond, in the presence of a base.

## DETAILED DESCRIPTION OF THE INVENTION

The fine cellulose fibers which are specifically disclosed in the above Patent Publications 1 and 2 are prepared by a method including finely fibrillating a raw material cellulose, and then modifying its surface with a modifier. However, when the present inventors have prepared fine cellulose fibers in accordance with the above methods, it was found that dispersibility with an organic solvent is not sufficient, and amounts of solvents and chemicals used are large in the production aspect, so that practical productivity cannot be obtained.
In addition, the cellulose composite material in Patent Publication 3 is prepared as a water dispersion supposing that the composite material is to be subjected to papermaking, so that if a dispersion medium is an organic solvent, the lowering of dispersibility is easily arrivable.
The fine cellulose fiber composite disclosed in Patent Publication 4 is described as being excellent in dispersibility in an organic solvent. However, surface modification is carried out after fine fibrillation and the method of modification thereof utilizes ion bonding, so that further improvements are desired from the viewpoint of practical productivity and from the viewpoint of thermal/chemical stability.
The finely fibrillated cellulose fibers specifically disclosed in Patent Publication 5 are those of which modifier is acetic anhydride, butyric anhydride, or butyryl chloride, and its bonding form is an ester bond. However, there are some concerns that an ester bond is weak under basic conditions, and that transesterification takes place when formed into a composite with a polyester resin, thereby lowering the resin strength, so that very limited usage situations are easily arrivable.
In consideration of the above, the present invention relates to modified cellulose fibers being stably dispersible and having a thermally and chemically stable structure, when blended with various organic solvents, and a method for efficiently producing the modified cellulose fibers.
In view of the above, as a result of intensive studies in order to solve the above problems, the present inventors have found out that cellulose fibers having excellent dispersibility in an organic solvent can be efficiently obtained by introducing a modifying group via an ether bond to a cellulose raw material, without having to introduce a modifying group after a finely fibrillating step.
The modified cellulose fibers of the present invention show excellent stable dispersion and thickening actions when blended with an organic solvent, and further exhibit some excellent effects that mechanical strength, heat resistance, and dimensional stability of the resin composition obtainable by forming the modified cellulose fibers and a resin into a composite are improved.

[Modified Cellulose Fibers]

The modified cellulose fibers of the present invention are characterized in that a specified substituent is bonded to a cellulose fiber surface via an ether bond. The phrase "bonded via an ether bond" as used herein means a state in which a hydroxyl group of the cellulose fiber surface is reacted with a modifying group to form an ether bond.
The reasons why the modified cellulose fibers of the present invention have excellent dispersibility in an organic solvent are assumed to be as follows. Celluloses, in general, are aggregated by hydrogen bonding by the surface hydroxyl groups to form bundles of microfibrils, meanwhile in the modified cellulose fibers of the present invention, the modifying

group is directly ether bonded to the cellulose chain of the cellulose fiber backbone by carrying out a reaction of introducing a specified modifying group to a surface hydroxyl group, thereby forming hydrophobic cellulose fibers in which a crystal structure of the cellulose is maintained. In addition, since the introduced modifying group has an alkyl group terminal of a specified chain length, a repulsion due to steric hindrance is obtained, thereby making dispersibility in an organic solvent excellent. Therefore, the modified cellulose fibers of the present invention are evenly dispersed in an organic solvent, and are likely to stably maintain their crystal structures, so that the mechanical strength of the resin composition obtained by forming the modified cellulose fibers and the resin into a composite is improved, and also heat resistance and dimensional stability become excellent. However, these assumptions are by no means limiting the present invention.

(Average Fiber Size)

The average fiber size of the modified cellulose fibers of the present invention is 5 μm or more, and the average fiber size is preferably 7 μm or more, and more preferably 10 μm or more, from the viewpoint of handling property, availability, and costs. In addition, the upper limit is, but not particularly set to, preferably 100 μm or less, more preferably 70 μm or less, even more preferably 50 μm or less, even more preferably 40 μm or less, and even more preferably 30 μm or less, from the viewpoint of handling property. Here, the average fiber size of the cellulose fibers as used herein can be measured in accordance with the following method.

Specifically, for example, a method including stirring cellulose fibers which were absolutely dried with a household mixer or the like in ion-exchanged water to defibrillate, and further adding ion-exchange water thereto while stirring to make an even aqueous dispersion, and analyzing a part of the aqueous dispersion obtained by "Kajaani Fiber Lab" manufactured by Metso Automation. According to the above method, the average fiber size can be measured as the fiber size in the order of micro-order. Incidentally, the detailed measurement method is as described in Examples.

(Modifying Group)

The modifying group in the modified cellulose fibers of the present invention is a substituent represented by the following general formula (1) and a substituent represented by the following general formula (2):

$$-CH_2-CH(OH)-R_1 \quad (1)$$

$$-CH_2-CH(OH)-CH_2-(OA)_n-O-R_1 \quad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and

these substituents are introduced alone or in any combinations thereof. Here, even if the introduced modifying group were either one of the above of substituents, each of substituents, which may be the identical substituent, or a combination of two or more kinds, may be introduced.

$R_1$ in the general formula (1) is a linear or branched alkyl group having 3 or more carbon atoms and 30 or less carbon atoms. The number of carbon atoms of the alkyl group is 3 or more and 30 or less, and the number of carbon atoms is preferably 4 or more, and more preferably 6 or more, from the viewpoint of mechanical strength, heat resistance, and dimensional stability of the resin composition obtained, and the number of carbon atoms is preferably 20 or less, more preferably 16 or less, even more preferably 12 or less, and still even more preferably 10 or less, from the viewpoint of availability and improvement in reactivity. Specific examples include a propyl group, a butyl group, a pentyl group, a hexyl group, a heptyl group, an octyl group, a nonyl group, a decyl group, an undecyl group, a dodecyl group, a hexadecyl group, an octadecyl group, an icosyl group, a triacontyl group, and the like.

In addition, $R_1$ in the general formula (1), which may depend upon the kind of the organic solvent or the like which is a dispersing agent, has the following preferred ranges, from the viewpoint of thickening action:

- In a case of an organic solvent having an SP value of 11 or more and 13 or less: It is preferably 3 or more, and more preferably 4 or more, and preferably 12 or less, and more preferably 10 or less.
- In a case of an organic solvent having an SP value of 9.2 or more and less than 11: It is preferably 5 or more, and more preferably 6 or more, and preferably 14 or less, and more preferably 12 or less.
- In a case of an organic solvent having an SP value of less than 9.2: It is preferably 8 or more, and more preferably 10 or more, and preferably 20 or less, and more preferably 18 or less.

Here, the organic solvent having an SP value of 11 or more and 13 or less includes dimethylformamide, ethanol,

acetonitrile, isopropyl alcohol, and the like; the organic solvent having an SP value of 9.2 or more and less than 11 includes methyl ethyl ketone, acetone, chloroform, dioxane, and the like; and the organic solvent having an SP value of less than 9.2 includes toluene, xylene, ethyl acetate, and the like. In addition, the SP value refers to a solubility parameter (unit: $(cal/cm^3)^{1/2}$), calculated by Fedors method, which is described, for example, in Referential Publication "SP Chi Kiso-Ouyo to Keisan Hoho (SP Values Basics and Applications and Method of Calculation)" (JOHOKIKO CO., LTD., 2005); Polymer Handbook Third Edition (A Wiley-Interscience Publication, 1989), or the like.

$R_1$ in the general formula (2) is a linear or branched alkyl group having 3 or more carbon atoms and 30 or less carbon atoms. The number of carbon atoms of the alkyl group is 3 or more and 30 or less, and the number of carbon atoms is preferably 4 or more, and more preferably 6 or more, from the viewpoint of mechanical strength, heat resistance, and dimensional stability of the resin composition obtained, and the number of carbon atoms is preferably 20 or less, more preferably 16 or less, and even more preferably 12 or less, from the viewpoint of availability and improvement in reactivity. Specific examples include the same ones as those of $R_1$ in the general formula (1) mentioned above.

In addition, $R_1$ in the general formula (2), which may depend upon the kind of the organic solvent or the like which is a dispersion medium, has the following preferred ranges, from the viewpoint of thickening action:

- In a case of an organic solvent having an SP value of 11 or more and 13 or less: It is preferably 4 or more, and more preferably 6 or more, and preferably 14 or less, more preferably 12 or less, and even more preferably 10 or less.
- In a case of an organic solvent having an SP value of 9.2 or more and less than 11: It is preferably 8 or more, and more preferably 10 or more, and preferably 16 or less, and more preferably 14 or less.
- In a case of an organic solvent having an SP value of less than 9.2: It is preferably 10 or more, and more preferably 12 or more, and preferably 22 or less, and more preferably 20 or less.

Here, the organic solvent as used herein is as mentioned above.

A in the general formula (2) is a linear or branched, divalent saturated hydrocarbon group having 1 or more carbon atoms and 6 or less carbon atoms, which forms an oxyalkylene group with an adjoining oxygen atom. The number of carbon atoms of A is 1 or more and 6 or less, and the number of carbon atoms is preferably 2 or more, from the viewpoint of availability and costs, and the number of carbon atoms is preferably 4 or less, and more preferably 3 or less, from the same viewpoint. Specific examples include a methylene group, an ethylene group, a propylene group, a butylene group, a pentylene group, a hexylene group, and the like, among which an ethylene group and a propylene group are preferred, and an ethylene group is more preferred.

n in the general formula (2) shows the number of moles of alkylene oxides added. n is a number of 0 or more and 50 or less, and n is preferably 3 or more, more preferably 5 or more, and even more preferably 10 or more, from the viewpoint of availability and costs, and n is preferably 40 or less, more preferably 30 or less, even more preferably 20 or less, and even more preferably 15 or less, from the same viewpoint and from the viewpoint of mechanical strength, heat resistance, and dimensional stability of the resin composition obtained.

The combination of A and n in the general formula (2) is preferably a combination in which A is a linear or branched, divalent saturated hydrocarbon group having 2 or more carbon atoms and 3 or less carbon atoms and n is a number of 0 or more and 20 or less, and more preferably a combination in which A is a linear or branched, divalent saturated hydrocarbon group having 2 or more carbon atoms and 3 or less carbon atoms and n is a number of 5 or more and 15 or less, from the viewpoint of reactivity and thickening effects due to exhibition of steric repulsion.

Specific examples of the substituent represented by the general formula (1) include, for example, a propylhydroxyethyl group, a butylhydroxyethyl group, a pentylhydroxyethyl group, a hexylhydroxyethyl group, a heptylhydroxyethyl group, an octylhydroxyethyl group, a nonylhydroxyethyl group, a decylhydroxyethyl group, an undecylhydroxyethyl group, a dodecylhydroxyethyl group, a hexadecylhydroxyethyl group, an octadecylhydroxyethyl group, an icosylhydroxyethyl group, a triacontylhydroxyethyl group, and the like.

Specific examples of the substituent represented by the general formula (2) include, for example, a 3-butoxy-2-hydroxy-propyl group, a 3-hexoxyethylene oxide-2-hydroxy-propyl group, a 3-hexoxy-2-hydroxypropyl group, a 3-octoxyethylene oxide-2-hydroxy-propyl group, a 3-octoxy-2-hydroxy-propyl group, a 6-ethyl-3-hexoxy-2-hydroxy-propyl group, a 6-ethyl-3-hexoxyethylene oxide-2-hydroxy-propyl group, a 3-decoxyethylene oxide-2-hydroxy-propyl group, a 3-decoxy-2-hydroxypropyl group, a 3-undecoxyethylene oxide-2-hydroxy-propyl group, a 3-undecoxy-2-hydroxy-propyl group, a 3-dodecoxyethylene oxide-2-hydroxy-propyl group, a 3-dodecoxy-2-hydroxy-propyl group, a 3-hexadecoxyethylene oxide-2-hydroxy-propyl group, a 3-hexadecoxy-2-hydroxy-propyl group, a 3-octadecoxyethylene oxide-2-hydroxy-propyl group, a 3-octadecoxy-2-hydroxy-propyl group, and the like. Here, the number of moles of the alkylene oxides added may be 0 or more and 50 or less. For example, the number of moles added in substituents having an oxyalkylene group such as ethylene oxide mentioned above includes substituents of 10, 12, 13, and 20 mol.

(Introduction Ratio)

In the modified cellulose fibers of the present invention, the introduction ratio of the substituent or substituents selected from substituents represented by the general formula (1) and substituents represented by the general formula (2) per one mol of the anhydrous glucose unit of the cellulose is preferably 0.001 mol or more, more preferably 0.005 mol or more, even more preferably 0.01 mol or more, even more preferably 0.05 mol or more, even more preferably 0.1 mol or more, even more preferably 0.2 mol or more, even more preferably 0.3 mol or more, and even more preferably 0.4 mol or more, from the viewpoint of affinity to the solvent. In addition, the introduction ratio is preferably 1.5 mol or less, more preferably 1.3 mol or less, even more preferably 1.0 mol or less, even more preferably 0.8 mol or less, even more preferably 0.6 mol or less, and even more preferably 0.5 mol or less, from the viewpoint of having cellulose I crystal structure and exhibiting strength. Here, when both of the substituent represented by the general formula (1) and the substituent represented by the general formula (2) are introduced, the introduction ratio refers to a total introduction molar ratio. The introduction ratio as used herein can be measured in accordance with the method described in Examples set forth below, which may be also described as an introduction molar ratio or modification ratio.

(Crystallinity)

The crystallinity of the modified cellulose fibers is preferably 10% or more, more preferably 15% or more, and even more preferably 20% or more, from the viewpoint of exhibiting strength. Also, the crystallinity is preferably 90% or less, more preferably 85% or less, even more preferably 80% or less, and even more preferably 75% or less, from the viewpoint of availability of the raw materials. Here, the crystallinity of the cellulose as used herein refers to a cellulose I crystallinity which is calculated from diffraction intensity values according to X-ray diffraction method, which can be measured by the method described in Examples set forth below. Here, the cellulose I refers to a crystal form of natural cellulose, and the cellulose I crystallinity means a proportion of the amount of crystalline region that occupies the entire cellulose.

[Method for Producing Modified Cellulose Fibers]

In the modified cellulose fibers of the present invention, the above substituent is bonded to the surface of the cellulose fibers via an ether bond as mentioned above, and the introduction of the substituent can be carried out in accordance with a known method without particular limitations.

Specifically, the cellulose-based raw material may be reacted with a compound having the above substituent in the presence of a base.

(Cellulose-Based Raw Material)

The cellulose-based raw material usable in the present invention includes, but not particularly limited to, woody raw materials (needle-leaf trees and broad-leaf trees); grassy raw materials (plant raw materials of Gramineae, Malvaceae, and Fabaceae, non-woody raw materials of plants of Palmae); pulps (cotton linter pulps obtained from fibers surrounding the cottonseeds, etc.); and papers (newspapers, corrugated cardboards, magazines, high-quality paper, etc.). Among them, woody and grassy raw materials are preferred, from the viewpoint of availability and costs.

The shape of the cellulose-based raw material is, but not particularly limited to, preferably fibrous, powdery, spherical, chip-like, or flaky, from the viewpoint of handling property. Also, it may be a mixture of these shapes.

In addition, the cellulose-based raw material can be previously subjected to at least one pretreatment selected from biochemical treatment, chemical treatment, and mechanical treatment, from the viewpoint of handing property and the like. In the biochemical treatment, the chemical used is not particularly limited, and the biochemical treatment includes, for example, a treatment using an enzyme such as endoglucanase, exoglucanase, or beta-glucosidase. In the chemical treatment, the chemical used is not particularly limited, and the chemical treatment includes, for example, an acid treatment with hydrochloric acid, sulfuric acid, or the like, and an oxidation treatment with hydrogen peroxide, ozone, or the like. In the mechanical treatment, the machines used and the treatment conditions are not particularly limited, and examples include roll mills such as high-pressure compression roll mills and roll-rotating mills, vertical roller mills such as ring roller mills, roller race mills or ball race mills, vessel driving medium mills such as tumbling ball mills, vibrating ball mills, vibrating rod mills, vibrating tube mills, planetary ball mills, or centrifugal fluidized bed mills, media agitating mills such as tower pulverizers, agitation tank-containing mills, flow tank-containing mills or annular mills, compact shearing mills such as high-speed centrifugal roller mills or angmills, mortar, millstone, Masscolloider, fret mills, edge-runner mills, knife mills, pin mills, cutter mills, and the like.

In addition, during the above mechanical treatment, the shape transformation by mechanical treatment can also be accelerated by adding an aid such as a solvent such as water, ethanol, isopropyl alcohol, t-butyl alcohol, toluene,

or xylene, a plasticizer such as a phthalic acid compound, an adipic acid compound, or a trimellitic acid compound, a hydrogen bonding-inhibitor such as urea, an alkali (alkaline earth) metal hydroxide, or an amine-based compound. By adding the shape transformation as described above, the handling property of the cellulose-based raw materials is improved, which makes the introduction of a substituent favorable, which in turn makes it possible to also improve the physical properties of the modified cellulose fibers obtained. The amount of the additive aid used varies depending upon the additive aid used or a means of the mechanical treatment used or the like, and the amount used, based on 100 parts by mass of the raw material is usually 5 parts by mass or more, preferably 10 parts by mass or more, and more preferably 20 parts by mass or more, from the viewpoint of accelerating the shape transformation, and the amount used is usually 10,000 parts by mass or less, preferably 5,000 parts by mass or less, and more preferably 3,000 parts by mass or less, from the viewpoint of accelerating the shape transformation and from the viewpoint of economic advantages.

The average fiber size of the cellulose-based raw material is not particularly limited, so long as the average fiber size is 5 μm or more, and the average fiber size is preferably 7 μm or more, more preferably 10 μm or more, and even more preferably 15 μm or more, from the viewpoint of handling property and costs. In addition, the upper limit is, but not particularly set, preferably 10,000 μm or less, more preferably 5,000 μm or less, even more preferably 1,000 μm or less, even more preferably 500 μm or less, and still even more preferably 100 μm or less, from the viewpoint of handling property. The average fiber size of the cellulose-based raw material can be measured in the same manner as the modified cellulose fibers mentioned above. The details are as described in Examples.

The composition of the cellulose-based raw material is not particularly limited. It is preferable that the cellulose content in the cellulose-based raw material is preferably 30% by mass or more, more preferably 50% by mass or more, and even more preferably 70% by mass or more, from the viewpoint of obtaining cellulose fibers, and the cellulose content is preferably 99% by mass or less, more preferably 98% by mass or less, even more preferably 95% by mass or less, and even more preferably 90% by mass or less, from the viewpoint of availability. Here, the cellulose content in the cellulose-based raw material refers to a cellulose content in the remainder component after removing water in the cellulose-based raw material.

In addition, the water content in the cellulose-based raw material is, but not particularly limited to, preferably 0.01% by mass or more, more preferably 0.1% by mass or more, even more preferably 0.5% by mass or more, even more preferably 1.0% by mass or more, even more preferably 1.5% by mass or more, and even more preferably 2.0% by mass or more, from the viewpoint of availability and costs, and the water content is preferably 50% by mass or less, more preferably 40% by mass or less, even more preferably 30% by mass or less, and even more preferably 20% by mass or less, from the viewpoint of handling property.

(Base)

In the present invention, the above cellulose-based raw material is mixed with a base.

The base usable in the present invention is, but not particularly limited to, preferably one or more members selected from the group consisting of alkali metal hydroxides, alkaline earth metal hydroxides, primary to tertiary amines, quaternary ammonium salts, imidazoles and derivatives thereof, pyridine and derivatives thereof, and alkoxides, from the viewpoint of progressing etherification reaction.

The alkali metal hydroxide and the alkaline earth metal hydroxide include sodium hydroxide, potassium hydroxide, lithium hydroxide, calcium hydroxide, barium hydroxide, and the like.

The primary to tertiary amines refer to primary amines, secondary amines, and tertiary amines, and specific examples include ethylenediamine, diethylamine, proline, N,N,N',N'-tetramethylethylenediamine, N,N,N' ,N' -tetramethyl-1 ,3 -propanediamine, N,N,N' ,N' -tetramethyl-1,6-hexanediamine, tris(3-dimethylaminopropyl)amine, N,N-dimethylcyclohexylamine, triethylamine, and the like.

The quaternary ammonium salt includes tetrabutylammonium hydroxide, tetrabutylammonium chloride, tetrabutylammonium fluoride, tetrabutylammonium bromide, tetraethylammonium hydroxide, tetraethylammonium chloride, tetraethylammonium fluoride, tetraethylammonium bromide, tetramethylammonium hydroxide, tetramethylammonium chloride, tetramethylammonium fluoride, tetramethylammonium bromide, and the like.

The imidazole and derivatives thereof include 1-methylimidazole, 3-aminopropylimidazole, carbonyldiimidazole, and the like.

The pyridine and derivatives thereof include N,N-dimethyl-4-aminopyridine, picoline, and the like.

The alkoxide includes sodium methoxide, sodium ethoxide, potassium t-butoxide, and the like.

The amount of the base, based on the anhydrous glucose unit of the cellulose-based raw material, is preferably 0.01 equivalents or more, more preferably 0.05 equivalents or more, even more preferably 0.1 equivalents or more, and even more preferably 0.2 equivalents or more, from the viewpoint of progressing the etherification reaction, and the amount of the base is preferably 10 equivalents or less, more preferably 8 equivalents or less, even more preferably 5 equivalents or less, and even more preferably 3 equivalents or less, from the viewpoint of production costs.

Here, the mixing of the above cellulose-based raw material and the base may be carried out in the presence

of a solvent. The solvent includes, but not particularly limited to, for example, water, isopropanol, t-butanol, dimethylformamide, toluene, methyl isobutyl ketone, acetonitrile, dimethyl sulfoxide, dimethylacetamide, 1,3-dimethyl-2-imidazolidinone, hexane, 1,4-dioxane, and mixtures thereof.

The mixing of the cellulose-based raw material and the base is not limited in the temperature and time, so long as the components can be homogeneously mixed.

(Compound Having Substituent)

Next, a mixture of the cellulose-based raw material and the base obtained above is reacted with one or more compounds selected from a compound having a substituent represented by the general formula (1) and a compound having a substituent represented by the general formula (2) mentioned above as a compound having a substituent. The compound is not particularly limited, so long as the compound is capable of bonding the above substituent during the reaction with the cellulose-based raw material, and in the present invention, it is preferable to use a compound having a cyclic structure group having reactivity, from the viewpoint of reactivity and a non-halogen-containing compound, and a compound having an epoxy group is preferably used. Each of the compounds will be exemplified hereinbelow.

As the compound having a substituent represented by the general formula (1), for example, a nonionic alkylene oxide compound represented by the following general formula (1A):

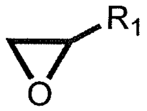

(1A)

wherein $R_1$ is a linear or branched alkyl group having 3 or more carbon atoms and 30 or less carbon atoms, is preferred. The compound may be one prepared by a known technique, or a commercially available product may be used. A total number of carbon atoms of the compound is 5 or more, preferably 6 or more, and more preferably 8 or more, from the viewpoint of mechanical strength, heat resistance, and dimensional stability of the resin composition obtained, and a total number of carbon atoms is 32 or less, preferably 22 or less, more preferably 18 or less, even more preferably 14 or less, and even more preferably 12 or less, from the viewpoint of mechanical strength, heat resistance, and dimensional stability of the resin composition obtained.

$R_1$ in the general formula (1A) is a linear or branched alkyl group having 3 or more carbon atoms and 30 or less carbon atoms. The number of carbon atoms of the alkyl group is 3 or more and 30 or less, and the number of carbon atoms is preferably 4 or more, and more preferably 6 or more, from the viewpoint of mechanical strength, heat resistance, and dimensional stability of the resin composition obtained, and the number of carbon atoms is preferably 20 or less, more preferably 16 or less, even more preferably 12 or less, and even more preferably 10 or less, from the viewpoint of mechanical strength, heat resistance, and dimensional stability of the resin composition obtained. Specific examples include those listed in the section of $R_1$ in the substituent represented by the general formula (1).

Specific examples of the compound represented by the general formula (1A) include 1,2-epoxyhexane, 1,2-epoxydecane, and 1,2-epoxyoctadecane.

The compound having a substituent represented by the general formula (2) is, for example, preferably a nonionic glycidyl ether compound represented by the following general formula (2A):

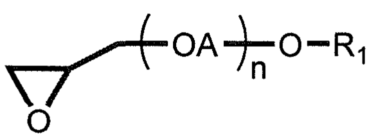

(2A)

wherein $R_1$ is a linear or branched alkyl group having 3 or more carbon atoms and 30 or less carbon atoms; A is a linear or branched, divalent saturated hydrocarbon group having 1 or more carbon atoms and 6 or less carbon atoms; and n is a number of 0 or more and 50 or less. The compound may be prepared in accordance with a known technique and used, or a commercially available product may be used. A total number of carbon atoms of the compound is 5 or more, preferably 6 or more, more preferably 10 or more, and even more preferably 20 or more, from the viewpoint of mechanical strength, heat resistance, and dimensional stability of the resin composition obtained, and a total number of carbon atoms is 100 or less, preferably 75 or less, more preferably 50 or less, and even more preferably 25 or less, from the viewpoint of mechanical strength, heat resistance, and dimensional stability of the resin composition obtained.

$R_1$ in the general formula (2A) is a linear or branched alkyl group having 3 or more carbon atoms and 30 or less carbon atoms. The number of carbon atoms of the alkyl group is 3 or more and 30 or less, and the number of carbon

atoms is preferably 4 or more, and more preferably 6 or more, from the viewpoint of mechanical strength, heat resistance, and dimensional stability of the resin composition obtained, and the number of carbon atoms is preferably 20 or less, more preferably 16 or less, and even more preferably 12 or less, from the viewpoint of mechanical strength, heat resistance, and dimensional stability of the resin composition obtained. Specific examples include those listed in the section of $R_1$ in the substituent represented by the general formula (2).

A in the general formula (2A) is a linear or branched, divalent saturated hydrocarbon group having 1 or more carbon atoms and 6 or less carbon atoms, which forms an oxyalkylene group with an adjoining oxygen atom. The number of carbon atoms of A is 1 or more and 6 or less, and the number of carbon atoms is preferably 2 or more, from the viewpoint of availability and costs, and the number of carbon atoms is preferably 4 or less, and more preferably 3 or less, from the same viewpoint. Specific examples include those listed in the section of A in the substituent represented by the general formula (2), among which an ethylene group and a propylene group are preferred, and an ethylene group is more preferred.

n in the general formula (2A) is the number of moles of alkylene oxides added. n is a number of 0 or more and 50 or less, and n is preferably 3 or more, more preferably 5 or more, and even more preferably 10 or more, from the viewpoint of availability and costs, and n is preferably 40 or less, more preferably 30 or less, even more preferably 20 or less, and even more preferably 15 or less, from the same viewpoint and from the viewpoint of affinity with a low-polarity solvent.

Specific examples of the compound represented by the general formula (2A) include butyl glycidyl ether, 2-ethylhexyl glycidyl ether, dodecyl glycidyl ether, stearyl glycidyl ether, and polyoxyalkylene alkyl ethers.

The amount of the above compound can be determined by a desired introduction ratio of the substituent represented by the general formula (1) and/or the substituent represented by the general formula (2) defined above in the modified cellulose fibers obtained, and the amount of the compound, based on the anhydrous glucose unit of the cellulose-based raw material, is preferably 0.01 equivalents or more, more preferably 0.1 equivalents or more, even more preferably 0.3 equivalents or more, even more preferably 0.5 equivalents or more, and still even more preferably 1.0 equivalent or more, from the viewpoint of reactivity, and the amount is preferably 10 equivalents or less, more preferably 8 equivalents or less, even more preferably 6.5 equivalents or less, and even more preferably 5 equivalents or less, from the viewpoint of production costs.

(Ether Reaction)

The ether reaction of the above compound and the cellulose-based raw material can be carried out by mixing both the components in the presence of a solvent. The solvent is not particularly limited, and solvents which are exemplified as being usable in the presence of the above base can be used.

The amount of the solvent used is not unconditionally determined because the amount depends upon the kinds of the cellulose-based raw material and the above compound having a substituent, and the amount used, based on 100 parts by mass of the cellulose-based raw material, is preferably 30 parts by mass or more, more preferably 50 parts by mass or more, even more preferably 75 parts by mass or more, even more preferably 100 parts by mass or more, and even more preferably 200 parts by mass or more, from the viewpoint of reactivity, and the amount used is preferably 10,000 parts by mass or less, more preferably 5,000 parts by mass or less, even more preferably 2,500 parts by mass or less, even more preferably 1,000 parts by mass or less, and even more preferably 500 parts by mass or less, from the viewpoint of productivity.

The mixing conditions are not particularly limited so long as the cellulose-based raw material and the above compound having a substituent are homogeneously mixed, so that the reaction can be sufficiently progressed, and continuous mixing treatment may or may not be carried out. In a case where a relatively large reaction vessel having a size exceeding 1 L is used, stirring may be appropriately carried out from the viewpoint of controlling the reaction temperature.

The reaction temperature is not unconditionally determined because the reaction temperature depends upon the kinds of the cellulose-based raw material and the above compound having a substituent and an intended introduction ratio, and the reaction temperature is preferably 40°C or higher, more preferably 50°C or higher, and even more preferably 60°C or higher, from the viewpoint of improving reactivity, and the reaction temperature is preferably 120°C or lower, more preferably 110°C or lower, and even more preferably 100°C or lower, from the viewpoint of inhibiting pyrolysis.

The reaction time is not unconditionally determined because the reaction time depends upon the kinds of the cellulose-based raw material and the above compound having a substituent and an intended introduction ratio, and the reaction time is preferably 3 hours or more, more preferably 6 hours or more, and even more preferably 10 hours or more, from the viewpoint of reactivity, and the reaction time is preferably 60 hours or less, more preferably 48 hours or less, and even more preferably 36 hours or less, from the viewpoint of productivity.

After the reaction, a post-treatment can be appropriately carried out in order to remove an unreacted compound, an unreacted base, or the like. As the method for post-treatment, for example, an unreacted base can be neutralized

with an acid (an organic acid, an inorganic acid, etc.), and thereafter washed with a solvent that dissolves the unreacted compound or base. As desired, drying (vacuum drying etc.) may be further carried out.

In addition, after the above reaction, for example, the same treatment as the pretreatment to which the cellulose-based raw material is subjected may be carried out for the reaction mixture to form into chips, flaky, and powdery shapes, from the viewpoint of handling property. By having the shape transformation by the above treatment, when the modified cellulose fibers of the present invention obtained are added to the resin composition, the physical properties such as Young's modulus of the resin composition can be improved.

Thus, the modified cellulose fibers of the present invention are obtained. Accordingly, a preferred method for producing modified cellulose fibers of the present invention includes, for example, an embodiment characterized by introducing one or more compounds selected from nonionic alkylene oxide compounds having a total number of carbon atoms of 5 or more and 32 or less per molecule and nonionic glycidyl ether compounds having a total number of carbon atoms of 5 or more and 100 or less per molecule to a cellulose-based raw material having an average fiber size of 5 μm or more via an ether bond, in the presence of a base.

The modified cellulose fibers obtained have an average fiber size of 5 μm or more, and are in a state that the substituent represented by the general formula (1) and/or the substituent represented by the general formula (2) is ether-bonded on the cellulose fiber surface. Specific examples include, for example, modified cellulose fibers represented by the following general formula (3):

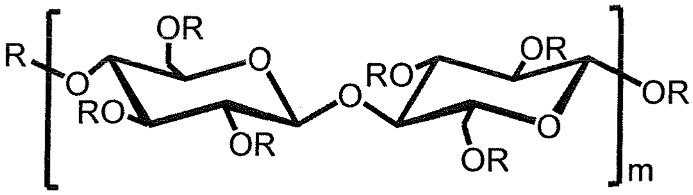

(3)

wherein R, which may be identical or different, is hydrogen, or a substituent selected from substituents represented by the general formula (1) defined above and substituents represented by the general formula (2) defined above; and m is an integer of 20 or more and 3,000 or less, with proviso that a case where all R's are simultaneously hydrogens is excluded.

In the modified cellulose fibers represented by the general formula (3), R, which may be identical or different, is hydrogen or a substituent represented by the general formula (1) and/or a substituent represented by the general formula (2), which has a repeating structure of cellulose unit into which the above substituent is introduced. As the number of repeats of the repeating structure, m in the general formula (3) may be an integer of 20 or more and 3,000 or less, and m is preferably 100 or more and 2,000 or less, from the viewpoint of mechanical strength, heat resistance, and dimensional stability of the resin composition obtained.

In addition, the modified cellulose fibers of the present invention may be subjected to a known finely fibrillating treatment after the above reaction, to be finely fibrillated. For example, the fine fibrillation can be carried out by carrying out a treatment with a high-pressure homogenizer or the like in an organic solvent. The finely fibrillated modified cellulose fibers have more excellent dispersion stability in an organic solvent. In the present invention, the finely fibrillated modified cellulose fibers which are dispersed in an organic solvent as described above may be also described as a fine modified cellulose dispersion. The average fiber size of the finely fibrillated modified cellulose fibers may be, for example, from 3 to 500 nm or so, and the average fiber size is preferably 3 nm or more, more preferably 10 nm or more, and even more preferably 20 nm or more, from the viewpoint of availability and costs, and the average fiber size is preferably 300 nm or less, more preferably 200 nm or less, even more preferably 150 nm or less, and even more preferably 120 nm or less, from the viewpoint of exhibiting thickening property and dimensional stability. Here, the average fiber size of the finely fibrillated modified cellulose fibers as used herein can be measured in accordance with the following methods.

In a case of having a fine average fiber size as mentioned above, a fiber size of a nano-order can be measured by observing a dispersion obtained by a finely fibrillating treatment with an optical microscope manufactured by KEYENCE, "Digital Microscope VHX-1000" at a magnification of from 300 to 1,000 folds, and calculating an average of 30 or more of fiber strands. In a case where observation with an optical microscope is difficult, a dispersion prepared by further adding a solvent to the above dispersion is dropped on mica and dried to provide an observation sample, and a measurement can be taken with an interatomic force microscope (AFM), Nanoscope III Tapping mode AFM, manufactured by Digital Instrument, using probe Point Probe (NCH) manufactured by NANOSENSORS. Generally, a minimum unit of cellulose nanofibers prepared from higher plants is packed in nearly square form having sizes of 6 × 6 molecular chains, so that the height analyzed in the image according to the AFM can be assumed to be a width of the fibers. Here, the detailed method for measurement is as described in Examples.

In a case where the finely fibrillated modified cellulose fibers are dispersed in an organic solvent having an SP value of 13 or less (dimethylformamide, methyl ethyl ketone, toluene, etc.) at 0.2% by mass (w/v), the viscosity at 25°C

is preferably 10 mPa•s or more, more preferably 15 mPa•s or more, and even more preferably 20 mPa•s or more, from the viewpoint of giving thickening property, and the viscosity is preferably 10,000 mPa•s or less, more preferably 7,000 mPa•s or less, and even more preferably 4,000 mPa•s or less, from the viewpoint of handling property. Here, the viscosity as used herein is a value measured with an E-type viscometer, and the details are described in Examples.

Since the modified cellulose fibers of the present invention have excellent dispersibility in an organic solvent, the modified cellulose fibers can be mixed with a known resin to provide a resin composition. The resin composition obtained can be worked depending upon the properties of the resin to be mixed, and since the modified cellulose fibers of the present invention are blended, it is considered that dispersibility in the resin is increased by repulsions due to steric hindrance, and at the same time the modified cellulose fibers maintain their crystal structures, whereby making it possible for the resin composition to have excellent mechanical strength, and have further improved heat resistance and dimensional stability.

The content of the modified cellulose fibers in the resin composition is not unconditionally set, and since the modified cellulose fibers of the present invention have excellent dispersibility in the resin, the content can be properly set depending upon the desired properties. In addition, the other agents that can be blended to the resin composition are not particularly limited so long as they are known ones, because of low reactivity owing to the introduction of a substituent represented by the general formula (1) and/or a substituent represented by the general formula (2) to the modified cellulose fibers of the present invention.

The resin composition obtained can be suitably used in various applications such as daily sundries, household electric appliance parts, packaging materials for household electric appliance parts, automobile parts, and resins for three-dimensional modeling.

With respect to the above-mentioned embodiments, the present invention further discloses the following modified cellulose fibers and methods for producing the modified cellulose fibers.

<1> Modified cellulose fibers having an average fiber size of 5 μm or more, wherein one or more substituents selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
are bonded to cellulose fibers via an ether bond, wherein the modified cellulose fibers have a cellulose I crystal structure.

<2> The modified cellulose fibers according to the above <1>, wherein the average fiber size is preferably 7 μm or more, and more preferably 10 μm or more, and preferably 100 μm or less, more preferably 70 μm or less, even more preferably 50 μm or less, even more preferably 40 μm or less, and even more preferably 30 μm or less.

<3> The modified cellulose fibers according to the above <1> or <2>, wherein the number of carbon atoms of $R_1$ in the general formula (1) is preferably 4 or more, and more preferably 6 or more, and preferably 20 or less, more preferably 16 or less, even more preferably 12 or less, and still even more preferably 10 or less.

<4> The modified cellulose fibers according to any one of the above <1> to <3>, wherein the number of carbon atoms of $R_1$ in the general formula (2) is preferably 4 or more, and more preferably 6 or more, and preferably 20 or less, more preferably 16 or less, and even more preferably 12 or less.

<5> The modified cellulose fibers according to any one of the above <1> to <4>, wherein the number of carbon atoms of A in the general formula (2) is preferably 2 or more, and preferably 4 or less, and more preferably 3 or less.

<6> The modified cellulose fibers according to any one of the above <1> to <5>, wherein A in the general formula (2) is preferably a group selected from the group consisting of a methylene group, an ethylene group, a propylene group, a butylene group, a pentylene group, and a hexylene group, an ethylene group and a propylene group are more preferred, and an ethylene group is even more preferred.

<7> The modified cellulose fibers according to any one of the above <1> to <6>, wherein n in the general formula (2) is preferably 3 or more, more preferably 5 or more, and even more preferably 10 or more, and preferably 40 or less, more preferably 30 or less, even more preferably 20 or less, and even more preferably 15 or less.

<8> The modified cellulose fibers according to any one of the above <1> to <7>, wherein the combination of A and n in the general formula (2) is preferably a combination in which A is a linear or branched, divalent saturated hydrocarbon group having 2 or more carbon atoms and 3 or less carbon atoms, and n is a number of 0 or more and

20 or less, and more preferably a combination in which A is a linear or branched, divalent saturated hydrocarbon group having 2 or more carbon atoms and 3 or less carbon atoms, and n is a number of 5 or more and 15 or less.
<9> The modified cellulose fibers according to any one of the above <1> to <8>, wherein the substituent represented by the general formula (1) is preferably a group selected from a propylhydroxyethyl group, a butylhydroxyethyl group, a pentylhydroxyethyl group, a hexylhydroxyethyl group, a heptylhydroxyethyl group, an octylhydroxyethyl group, a nonylhydroxyethyl group, a decylhydroxyethyl group, an undecylhydroxyethyl group, a dodecylhydroxyethyl group, a hexadecylhydroxyethyl group, an octadecylhydroxyethyl group, an icosylhydroxyethyl group, and a triacontylhydroxyethyl group.
<10> The modified cellulose fibers according to any one of the above <1> to <9>, wherein the substituent represented by the general formula (2) is preferably a group selected from a 3-butoxy-2-hydroxy-propyl group, a 3-hexoxyethylene oxide-2-hydroxy-propyl group, a 3-hexoxy-2-hydroxypropyl group, a 3-octoxyethylene oxide-2-hydroxy-propyl group, a 3-octoxy-2-hydroxy-propyl group, a 6-ethyl-3-hexoxy-2-hydroxy-propyl group, a 6-ethyl-3-hexoxyethylene oxide-2-hydroxy-propyl group, a 3-decoxyethylene oxide-2-hydroxy-propyl group, a 3-decoxy-2-hydroxypropyl group, a 3-undecoxyethylene oxide-2-hydroxy-propyl group, a 3-undecoxy-2-hydroxy-propyl group, a 3-dodecoxyethylene oxide-2-hydroxy-propyl group, a 3-dodecoxy-2-hydroxy-propyl group, a 3-hexadecoxyethylene oxide-2-hydroxy-propyl group, a 3-hexadecoxy-2-hydroxy-propyl group, a 3-octadecoxyethylene oxide-2-hydroxy-propyl group, and a 3-octadecoxy-2-hydroxy-propyl group.
<11> The modified cellulose fibers according to any one of the above <1> to <10>, wherein the introduction ratio of the substituents represented by the general formula (1) and/or the substituents represented by the general formula (2) per one mol of the anhydrous glucose unit of the cellulose is preferably 0.001 mol or more, more preferably 0.005 mol or more, even more preferably 0.01 mol or more, even more preferably 0.05 mol or more, even more preferably 0.1 mol or more, even more preferably 0.2 mol or more, even more preferably 0.3 mol or more, and even more preferably 0.4 mol or more, and preferably 1.5 mol or less, more preferably 1.3 mol or less, even more preferably 1.0 mol or less, even more preferably 0.8 mol or less, even more preferably 0.6 mol or less, and even more preferably 0.5 mol or less.
<12> The modified cellulose fibers according to any one of the above <1> to <11>, wherein the crystallinity is preferably 10% or more, more preferably 15% or more, and even more preferably 20% or more, and preferably 90% or less, more preferably 85% or less, even more preferably 80% or less, and even more preferably 75% or less.
<13> A method for producing modified cellulose fibers as defined in any one of the above <1> to <12>, characterized in that the method includes reacting a cellulose-based raw material with a compound selected from a compound having a substituent represented by the general formula (1) and a compound having a substituent represented by the general formula (2), in the presence of a base.
<14> The method according to the above <13>, wherein the average fiber size of the cellulose-based raw material is preferably 7 μm or more, more preferably 10 μm or more, and even more preferably 15 μm or more, and preferably 10,000 μm or less, more preferably 5,000 μm or less, even more preferably 1,000 μm or less, even more preferably 500 μm or less, and still even more preferably 100 μm or less.
<15> The method according to the above <13> or <14>, wherein the cellulose content in the cellulose-based raw material is preferably 30% by mass or more, more preferably 50% by mass or more, and even more preferably 70% by mass or more, and preferably 99% by mass or less, more preferably 98% by mass or less, even more preferably 95% by mass or less, and even more preferably 90% by mass or less.
<16> The method according to any one of the above <13> to <15>, wherein the water content in the cellulose-based raw material is preferably 0.01% by mass or more, more preferably 0.1% by mass or more, even more preferably 0.5% by mass or more, even more preferably 1.0% by mass or more, even more preferably 1.5% by mass or more, and even more preferably 2.0% by mass or more, and preferably 50% by mass or less, more preferably 40% by mass or less, even more preferably 30% by mass or less, and even more preferably 20% by mass or less.
<17> The method according to any one of the above <13> to <16>, wherein the cellulose-based raw material is mixed with a base.
<18> The method according to any one of the above <13> to <17>, wherein the base is preferably one or more members selected from the group consisting of alkali metal hydroxides, alkaline earth metal hydroxides, primary to tertiary amines, quaternary ammonium salts, imidazole and derivatives thereof, pyridine and derivatives thereof, and alkoxides.
<19> The method according to the above <18>, wherein the alkali metal hydroxides and the alkaline earth metal hydroxide are selected from the group consisting of sodium hydroxide, potassium hydroxide, lithium hydroxide, calcium hydroxide, and barium hydroxide.
<20> The method according to the above <18>, wherein the primary to tertiary amines are selected from the group consisting of ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine, and triethylamine.

<21> The method according to the above <18>, wherein the quaternary ammonium salt is selected from the group consisting of tetrabutylammonium hydroxide, tetrabutylammonium chloride, tetrabutylammonium fluoride, tetrabutylammonium bromide, tetraethylammonium hydroxide, tetraethylammonium chloride, tetraethylammonium fluoride, tetraethylammonium bromide, tetramethylammonium hydroxide, tetramethylammonium chloride, tetramethylammonium fluoride, and tetramethylammonium bromide.

<22> The method according to the above <18>, wherein the imidazole and derivatives thereof are selected from the group consisting of 1-methylimidazole, 3-aminopropylimidazole, and carbonyldiimidazole.

<23> The method according to the above <18>, wherein the pyridine and derivatives thereof are selected from the group consisting of N,N-dimethyl-4-aminopyridine and picoline.

<24> The method according to the above <18>, wherein the alkoxide is selected from the group consisting of sodium methoxide, sodium ethoxide, and potassium t-butoxide.

<25> The method according to any one of the above <13> to <24>, wherein the amount of the base, based on the anhydrous glucose unit of the cellulose-based raw material, is preferably 0.01 equivalents or more, more preferably 0.05 equivalents or more, even more preferably 0.1 equivalents or more, and even more preferably 0.2 equivalents or more, and preferably 10 equivalents or less, more preferably 8 equivalents or less, even more preferably 5 equivalents or less, and even more preferably 3 equivalents or less.

<26> The method according to any one of the above <13> to <25>, wherein the compound having a substituent represented by the general formula (1) is preferably a nonionic alkylene oxide compound represented by the following general formula (1A):

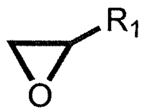

(1A)

wherein $R_1$ is a linear or branched alkyl group having 3 or more carbon atoms and 30 or less carbon atoms, and wherein a total number of carbon atoms of the compound is 5 or more, preferably 6 or more, and more preferably 8 or more, and 32 or less, preferably 22 or less, more preferably 18 or less, even more preferably 14 or less, and even more preferably 12 or less.

<27> The method according to the above <26>, wherein the number of carbon atoms of $R_1$ in the general formula (1A) is preferably 4 or more, and more preferably 6 or more, and preferably 20 or less, more preferably 16 or less, even more preferably 12 or less, and even more preferably 10 or less.

<28> The method according to the above <26> or <27>, wherein the compound represented by the general formula (1A) is selected from the group consisting of 1,2-epoxyhexane, 1,2-epoxydecane, and 1,2-epoxyoctadecane.

<29> The method according to any one of the above <13> to <25>, wherein the compound having a substituent represented by the general formula (2) is preferably a nonionic glycidyl ether compound represented by the following general formula (2A):

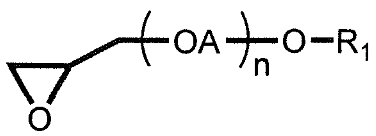

(2A)

wherein $R_1$ is a linear or branched alkyl group having 3 or more carbon atoms and 30 or less carbon atoms; A is a linear or branched, divalent saturated hydrocarbon group having 1 or more carbon atoms and 6 or less carbon atoms; and n is a number of 0 or more and 50 or less, and wherein a total number of carbon atoms of the compound is 5 or more, preferably 6 or more, more preferably 10 or more, and even more preferably 20 or more, and 100 or less, preferably 75 or less, more preferably 50 or less, and even more preferably 25 or less.

<30> The method according to the above <29>, wherein the number of carbon atoms of $R_1$ in the general formula (2A) is preferably 4 or more, and more preferably 6 or more, and preferably 20 or less, more preferably 16 or less, and even more preferably 12 or less.

<31> The method according to the above <29> or <30>, wherein the number of carbon atoms of A in the general formula (2A) is preferably 2 or more, and preferably 4 or less, and more preferably 3 or less.

<32> The method according to any one of the above <29> to <31>, wherein n in the general formula (2A) is preferably 3 or more, more preferably 5 or more, and even more preferably 10 or more, and preferably 40 or less, more preferably 30 or less, even more preferably 20 or less, and even more preferably 15 or less.

<33> The method according to any one of the above <29> to <32>, wherein the compound represented by the

general formula (2A) is selected from the group consisting of butyl glycidyl ether, 2-ethylhexyl glycidyl ether, dodecyl glycidyl ether, stearyl glycidyl ether, and polyoxyalkylene alkyl ethers.

<34> The method according to any one of the above <13> to <33>, wherein the used amount of the compound having a substituent represented by the general formula (1) and/or the compound having a substituent represented by the general formula (2), based on the anhydrous glucose unit of the cellulose-based raw material, is preferably 0.01 equivalents or more, more preferably 0.1 equivalents or more, even more preferably 0.3 equivalents or more, even more preferably 0.5 equivalents or more, and even more preferably 1.0 equivalent or more, and preferably 10 equivalents or less, more preferably 8 equivalents or less, even more preferably 6.5 equivalents or less, and even more preferably 5 equivalents or less.

<35> The method according to any one of the above <13> to <34>, wherein as the solvent, water, isopropanol, t-butanol, dimethylformamide, toluene, methyl isobutyl ketone, acetonitrile, dimethyl sulfoxide, dimethylacetamide, 1,3-dimethyl-2-imidazolidinone, hexane, 1,4-dioxane, and mixtures thereof can be used.

<36> The method according to the above <35>, wherein the amount of solvent used, based on 100 parts by mass of the cellulose-based raw material, is preferably 30 parts by mass or more, more preferably 50 parts by mass or more, even more preferably 75 parts by mass or more, even more preferably 100 parts by mass or more, and even more preferably 200 parts by mass or more, and preferably 10,000 parts by mass or less, more preferably 5,000 parts by mass or less, even more preferably 2,500 parts by mass or less, even more preferably 1,000 parts by mass or less, and even more preferably 500 parts by mass or less.

<37> The method according to any one of the above <13> to <36>, wherein the reaction temperature is preferably 40°C or higher, more preferably 50°C or higher, and even more preferably 60°C or higher, and preferably 120°C or lower, more preferably 110°C or lower, and even more preferably 100°C or lower.

<38> The method according to any one of the above <13> to <37>, wherein the reaction time is preferably 3 hours or more, more preferably 6 hours or more, and even more preferably 10 hours or more, and preferably 60 hours or less, more preferably 48 hours or less, and even more preferably 36 hours or less.

<39> The method according to any one of the above <13> to <38>, characterized in that the method includes introducing one or more compounds selected from nonionic alkylene oxide compounds having a total number of carbon atoms of 5 or more and 32 or less per molecule and nonionic glycidyl ether compounds having a total number of carbon atoms of 5 or more and 100 or less per molecule to a cellulose-based raw material having an average fiber size of 5 μm or more via an ether bond, in the presence of a base.

<40> A method for producing modified cellulose fibers, the modified cellulose fibers having an average fiber size of 5 μm or more, wherein one or more substituents selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,

are bonded to cellulose fibers via an ether bond, wherein the modified cellulose fibers have a cellulose I crystal structure,

characterized in that the method includes introducing one or more compounds selected from nonionic alkylene oxide compounds having a total number of carbon atoms of 5 or more and 32 or less per molecule and nonionic glycidyl ether compounds having a total number of carbon atoms of 5 or more and 100 or less per molecule to a cellulose-based raw material having an average fiber size of 5 μm or more via an ether bond, in the presence of a base.

<41> The modified cellulose fibers according to any one of the above <1> to <12>, which are represented by the following general formula (3):

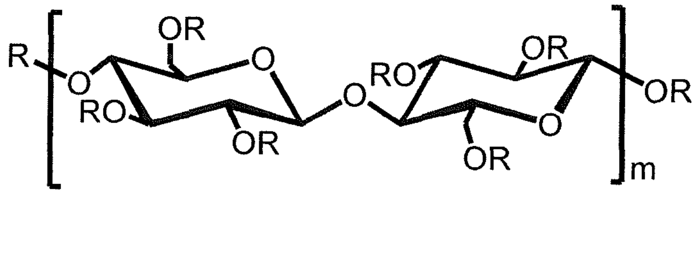

(3)

wherein R, which may be identical or different, is hydrogen, or a substituent selected from substituents represented by the general formula (1) defined above and substituents represented by the general formula (2) defined above; and m is an integer of 20 or more and 3,000 or less, with proviso that a case where all R's are simultaneously hydrogens is excluded.

<42> The modified cellulose fibers according to the above <41>, wherein in the modified cellulose fibers represented by the general formula (3), R, which may be identical or different, is hydrogen, or a substituent selected from substituents represented by the general formula (1) and substituents represented by the general formula (2), wherein the modified cellulose fibers have a repeating structure of cellulose units into which the substituent is introduced, and wherein m in the general formula (3) is preferably 100 or more and 2,000 or less.

<43> The modified cellulose fibers according to any one of the above <1> to <12>, <41>, and <42>, which is finely fibrillated by carrying out a known finely fibrillating treatment.

<44> The modified cellulose fibers according to the above <43>, wherein the finely fibrillated modified cellulose fibers may have an average fiber size of from 3 to 500 nm or so, preferably 3 nm or more, more preferably 10 nm or more, and even more preferably 20 nm or more, and preferably 300 nm or less, more preferably 200 nm or less, even more preferably 150 nm or less, and even more preferably 120 nm or less.

<45> The modified cellulose fibers according to the above <43> or <44>, wherein when the finely fibrillated modified cellulose fibers are dispersed in an organic solvent having an SP value of 13 or less (dimethylformamide, methyl ethyl ketone, toluene or the like) at a concentration of 0.2% by mass (w/v), the viscosity at 25°C is preferably 10 mPa•s or more, more preferably 15 mPa•s or more, and even more preferably 20 mPa•s or more, and preferably 10,000 mPa•s or less, more preferably 7,000 mPa•s or less, and even more preferably 4,000 mPa•s or less.

<46> A resin composition containing modified cellulose resin as defined in any one of the above <1> to <12>, and <41> to <45> and a known resin.

<47> The resin composition according to the above <46>, which can be suitably used in various applications such as daily sundries, household electric appliance parts, packaging materials for household electric appliance parts, automobile parts, and resins for three-dimensional modeling.

## EXAMPLES

The present invention will be described more specifically by means of the Examples. Here, the Examples are mere exemplifications of the present invention, without intending to limit the scope of the present invention thereto. Parts in Examples are parts by mass unless specified otherwise. Here, the term "ambient pressure" is 101.3 kPa, and the term "ambient temperature (room temperature)" is 25°C.

### Production Example 1 of Compound Having Substituent - Production of Stearyl Glycidyl Ether

Ten kilograms of stearyl alcohol, KALCOL 8098 manufactured by Kao Corporation, 0.36 kg of tetrabutylammonium bromide manufactured by KOEI CHEMICAL COMPANY LIMITED, 7.5 kg of epichlorohydrin manufactured by Dow Chemical Company, and 10 kg of hexane were supplied into a 100-L reactor, and the contents were mixed under a nitrogen atmosphere. While holding a liquid mixture at 50°C, 12 kg of a 48% by mass aqueous sodium hydroxide solution manufactured by Nankai Chemical Co., Ltd. was added dropwise thereto over 30 minutes. After the termination of the dropwise addition, the mixture was aged at 50°C for additional 4 hours, and thereafter washed with 13 kg of water repeatedly 8 times, to remove salts and alkali. Thereafter, the internal reactor temperature was raised to 90°C, hexane was distilled off from an upper layer, and steam was further purged under a reduced pressure of 6.6 kPa to remove low-boiling point compounds. After dehydration, the mixture was subjected to a reduced-pressure distillation at an internal reactor temperature of 250°C and an internal reactor pressure of 1.3 kPa, to provide 8.6 kg of white stearyl glycidyl ether.

### Production Example 2 of Compound Having Substituent - Production of Polyoxyalkylene Alkyl Etherification Agent

A 1,000-L reactor was charged with 250 kg of a polyoxyethylene(13)-n-alkyl(C12) ether, EMULGEN 120 manufactured by Kao Corporation, alkyl chain length; n-C12, molar average degree of polymerization of oxyethylene groups: 13, in a molten state, and further 3.8 kg of tetrabutylammonium bromide manufactured by KOEI CHEMICAL COMPANY LIMITED and 81 kg of epichlorohydrin manufactured by Dow Chemical Company, and 83 kg of toluene were supplied into the reactor, and the contents were mixed while stirring. While maintaining the internal reactor temperature at 50°C, 130 kg of a 48% by mass aqueous sodium hydroxide solution manufactured by Nankai Chemical Co., Ltd. was added dropwise for 1 hour with stirring. After the termination of the dropwise addition, the mixture was aged for 6 hours with stirring, while maintaining the internal reactor temperature at 50°C. After the termination of aging, the reaction mixture was washed with 250 kg of water 6 times to remove salts and alkali, and an organic layer was heated to 90°C under a reduced pressure of 6.6 kPa, to distill off the residual epichlorohydrin, solvents, and water. The mixture was further

purged with 250 kg of steam under a reduced pressure, to remove low-boiling point compounds, to provide 240 kg of an n-alkyl(C 12) polyoxyethylene(13) glycidyl ether having a structure of the following formula (4):

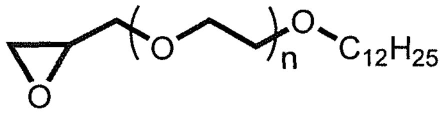

(4)

Production Example 1 of Cellulose-Based Raw Material - Production of Alkali-Treated Bagasse

As an entire treatment liquid 937 parts by mass of water, granular sodium hydroxide in an amount so that sodium hydroxide would be 15.2 parts by mass, and ion-exchanged water were added, based on 100 parts by mass of bagasse on a dry basis, the residual sugar cane, and the contents were heat-treated at a temperature of 120°C for 2 hours in an autoclave manufactured by TOMY SEIKO CO., LTD., LSX-700. After the treatment, the mixture was filtered and washed with ion-exchanged water, and vacuum-dried for one day and night at 70°C, to provide alkali-treated bagasse in a fibrous form, having an average fiber size of 24 μm, a cellulose content of 70% by mass, and a water content of 3% by mass.

Production Example 2 of Cellulose-Based Raw Material - Production of Powdery Cellulose A

One-hundred grams of needle-leaf bleached kraft pulp, hereinafter abbreviated as NBKP, manufactured by Fletcher Challenge Canada Ltd., "Machenzie," CSF 650 ml, in a fibrous form, having an average fiber size of 24 μm, a cellulose content of 90% by mass, and a water content of 5% by mass, were weighed out on a dry basis, supplied into a batch-type vibrating mill manufactured by CHUO KAKOHKI CO., LTD "MB-1," vessel entire volume: 3.5 L, 13 rods made of SUS304 being used, each rod having a diameter φ of 30 mm, a length of 218 mm, and cross-sectional shape of circular, rod filling ratio of 57%, and subjected to a pulverization treatment for 20 minutes, to provide a powdery cellulose A having an average fiber size of 25 μm, a crystallinity of 35%, and a water content of 3% by mass.

Example 1 < Modification with 1,2-Epoxyhexane >

A needle-leaf bleached kraft pulp (NBKP) was used as the cellulose-based raw material. First, to 1.5 g of absolutely dried NBKP were added 1.5 g of a 6.4% by mass aqueous sodium hydroxide solution, prepared from sodium hydroxide granules manufactured by Wako Pure Chemical Industries, Ltd. and ion-exchanged water, NaOH 0.26 equivalents per 1 equivalent of the anhydrous glucose unit (AGU: calculated by assuming that the cellulose-based raw material is entirely constituted by anhydrous glucose units, hereinafter referred to the same), and 1.5 g of isopropanol manufactured by Wako Pure Chemical Industries, Ltd., and the mixture was homogeneously mixed. Thereafter, 1.4 g of 1,2-epoxyhexane manufactured by Wako Pure Chemicals Industries, Ltd. (1.5 equivalents per AGU) was added thereto, and the contents were tightly sealed, and thereafter allowed to react while standing at 70°C for 24 h. After the reaction, the reaction mixture was neutralized with acetic acid manufactured by Wako Pure Chemical Industries, Ltd., and sufficiently washed with a mixed solvent of water/isopropanol to remove impurities. Further, the mixture was vacuum-dried overnight at 50°C, to provide modified cellulose fibers.

The amount 0.1 g of the modified cellulose fibers obtained were supplied into 49.9 g of dimethylformamide manufactured by Wako Pure Chemical Industries, Ltd. (DMF), and the mixture was stirred with a homogenizer T.K. ROBOMICS manufactured by PRIMIX Corporation at 3,000 rpm for 30 minutes, and thereafter subjected to 10-pass treatment with a high-pressure homogenizer "NanoVater L-ES" manufactured by YOSHIDA KIKAI CO., LTD. at 100 MPa, to provide a fine modified cellulose dispersion in which finely fibrillated modified cellulose fibers were dispersed in DMF, a solid content concentration of which was 0.2% by mass.

Example 2 < Modification with 1,2-Epoxyhexane >

To 1.5 g of absolutely dried NBKP were added 6.0 g of DMF and 1.8 g of N,N-dimethyl-4-aminopyridine manufactured by Wako Pure Chemical Industries, Ltd. (DMAP, 1.6 equivalents per AGU), and the mixture was homogeneously mixed. Thereafter, 4.6 g of 1,2-epoxyhexane (5 equivalents per AGU) was added thereto, and the contents were tightly sealed, and thereafter allowed to react while standing at 90°C for 24 h. After the reaction, the reaction mixture was neutralized with acetic acid, and sufficiently washed with DMF and a mixed solvent of water/isopropanol to remove impurities. Further, the mixture was vacuum-dried overnight at 50°C, to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated

modified cellulose fibers were dispersed in DMF, a solid content concentration of which was 0.2% by mass.

Example 3 < Modification with 1,2-Epoxydecane >

To 1.5 g of absolutely dried NBKP were added 6.0 g of DMF and 1.8 g of DMAP (1.6 equivalents per AGU), and the mixture was homogeneously mixed. Thereafter, 7.2 g of 1,2-epoxydecane manufactured by Wako Pure Chemical Industries, Ltd. (5 equivalents per AGU) was added thereto, and the contents were tightly sealed, and thereafter allowed to react while standing at 90°C for 24 h. After the reaction, the reaction mixture was neutralized with acetic acid, and sufficiently washed with DMF and a mixed solvent of water/isopropanol to remove impurities. Further, the mixture was vacuum-dried overnight at 50°C, to provide modified cellulose fibers.
The amount 0.1 g of the resulting modified cellulose fibers were supplied into 49.9 g of methyl ethyl ketone manufactured by Wako Pure Chemical Industries, Ltd. (MEK), and subjected to the same dispersion treatment as in Example 1, to provide a fine modified cellulose dispersion in which finely fibrillated modified cellulose fibers were dispersed in MEK, a solid content concentration of which was 0.2% by mass.

Example 4 < Modification with 1,2-Epoxydecane >

The amount 0.1 g of the modified cellulose fibers obtained in Example 3 were supplied into 49.9 g of toluene manufactured by Wako Pure Chemical Industries, Ltd., and subjected to the same dispersion treatment as in Example 1, to provide a fine modified cellulose dispersion in which finely fibrillated modified cellulose fibers were dispersed in toluene, a solid content concentration of which was 0.2% by mass.

Example 7 < Modification with 1,2-Epoxyoctadecane >

To 1.5 g of absolutely dried NBKP were added 6.0 g of DMF and 1.8 g of DMAP (1.6 equivalents per AGU), and the mixture was homogeneously mixed. Thereafter, 12.4 g of 1,2-epoxyoctadecane manufactured by Tokyo Chemical Industry Co., Ltd. (5 equivalents per AGU) was added thereto, and the contents were tightly sealed, and thereafter allowed to react while standing at 90°C for 24 h. After the reaction, the reaction mixture was neutralized with acetic acid, and sufficiently washed with DMF and a mixed solvent of water/isopropanol to remove impurities. Further, the mixture was vacuum-dried overnight at 50°C, to provide modified cellulose fibers.
The amount 0.1 g of the modified cellulose fibers obtained were supplied into 49.9 g of toluene, and subjected to the same dispersion treatment as in Example 1, to provide a fine modified cellulose dispersion in which finely fibrillated modified cellulose fibers were dispersed in toluene, a solid content concentration of which was 0.2% by mass.

Example 31 < Modification with 1,2-Epoxyoctadecane >

The same treatments as in Example 7 were carried out except that the amount of 1,2-epoxyoctadecane was changed to 24.8 g (10 equivalents per AGU), to provide modified cellulose fibers.
The amount 0.1 g of the modified cellulose fibers obtained were supplied into 49.9 g of toluene, and subjected to the same dispersion treatment as in Example 1, to provide a fine modified cellulose dispersion in which finely fibrillated modified cellulose fibers were dispersed in toluene, a solid content concentration of which was 0.2% by mass.

Example 32 < Modification with Butyl Glycidyl Ether >

The same procedures as in Example 2 were employed except that the reaction reagent was changed to butyl glycidyl ether manufactured by Tokyo Chemical Industry Co., Ltd., and that the amount of the reagent was changed to 6.0 g (5 equivalents per AGU), to provide modified cellulose fibers.
The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Example 33 < Modification with 2-Ethylhexyl Glycidyl Ether >

The same procedures as in Example 2 were employed except that the reaction reagent was changed to 2-ethylhexyl glycidyl ether manufactured by Tokyo Chemical Industry Co., Ltd., and that the amount of the reagent was changed to 8.6 g (5 equivalents per AGU), to provide modified cellulose fibers.
The amount 0.1 g of the modified cellulose fibers obtained were supplied into 49.9 g of DMF, and subjected to the same dispersion treatment as in Example 1, to provide a fine modified cellulose dispersion in which finely fibrillated

modified cellulose fibers were dispersed in DMF, a solid content concentration of which was 0.2% by mass.

Example 34 < Modification with Dodecyl Glycidyl Ether >

The same procedures as in Example 2 were employed except that the reaction reagent was changed to dodecyl glycidyl ether manufactured by Tokyo Chemical Industry Co., Ltd., and that the amount of the reagent was changed to 11.2 g (5 equivalents per AGU), to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Example 35 < Modification with Dodecyl Glycidyl Ether >

The amount 0.1 g of the modified cellulose fibers obtained in Example 34 were supplied into 49.9 g of MEK, and subjected to the same dispersion treatment as in Example 1, to provide a fine modified cellulose dispersion in which finely fibrillated modified cellulose fibers were dispersed in MEK, a solid content concentration of which was 0.2% by mass.

Example 8 < Modification with Stearyl Glycidyl Ether >

To 1.5 g of absolutely dried NBKP were added 6.0 g of acetonitrile manufactured by Wako Pure Chemical Industries, Ltd. and 2.7 g of tetrabutylammonium hydroxide manufactured by Wako Pure Chemical Industries, Ltd., a 10% aqueous solution, (TBAH, 0.8 equivalents per AGU), and the mixture was homogeneously mixed. Thereafter, 15.5 g of stearyl glycidyl ether prepared in Production Example 1 of Compound Having Substituent (3 equivalents per AGU) was added thereto, and the contents were tightly sealed, and thereafter allowed to react while standing at 70°C for 24 h. After the reaction, the reaction mixture was neutralized with acetic acid, and sufficiently washed with DMF and a mixed solvent of water/isopropanol to remove impurities. Further, the mixture was vacuum-dried overnight at 50°C, to provide modified cellulose fibers.

The amount 0.1 g of the modified cellulose fibers obtained were supplied into 49.9 g of toluene, and subjected to the same dispersion treatment as in Example 1, to provide a fine modified cellulose dispersion in which finely fibrillated modified cellulose fibers were dispersed in toluene, a solid content concentration of which was 0.2% by mass.

Example 36 < Modification with Stearyl Glycidyl Ether >

The same procedures as in Example 8 were employed except that the amount of stearyl glycidyl ether was changed to 31.0 g (6 equivalents per AGU), to provide modified cellulose fibers.

The amount 0.1 g of the modified cellulose fibers obtained were supplied into 49.9 g of toluene, and subjected to the same dispersion treatment as in Example 1, to provide a fine modified cellulose dispersion in which finely fibrillated modified cellulose fibers were dispersed in toluene, a solid content concentration of which was 0.2% by mass.

Example 9

To 1.5 g of absolutely dried NBKP were added 6.0 g of acetonitrile and 2.7 g of TBAH (0.8 equivalents per AGU), and the mixture was homogeneously mixed. Thereafter, 22.6 g of a polyoxyalkylene alkyl etherification agent prepared in Production Example 2 of Compound Having Substituent (3 equivalents per AGU) was added thereto, and the contents were tightly sealed, and thereafter allowed to react while standing at 70°C for 24 h. After the reaction, the reaction mixture was neutralized with acetic acid, and sufficiently washed with DMF and a mixed solvent of water/isopropanol to remove impurities. Further, the mixture was vacuum-dried overnight at 50°C, to provide modified cellulose fibers.

The amount 0.1 g of the modified cellulose fibers obtained were supplied into 49.9 g of MEK, and subjected to the same dispersion treatment as in Example 1, to provide a fine modified cellulose dispersion in which finely fibrillated modified cellulose fibers were dispersed in MEK, a solid content concentration of which was 0.2% by mass.

Comparative Example 1 < Unreacted Pulp >

The amount 0.1 g of the absolutely dried NBKP was directly supplied to 49.9 g of DMF, and the mixture was subjected to the same dispersion treatment as in Example 1, to provide a fine modified cellulose dispersion in which finely fibrillated modified cellulose fibers were dispersed in DMF, a solid content concentration of which was 0.2% by mass.

Comparative Example 2 < Modification with Propylene Oxide >

The same procedures as in Example 1 were employed except that the reaction reagent was changed to propylene oxide, and that the amount of the reagent was changed to 0.16 g (0.3 equivalents per AGU), to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Comparative Example 3 < Modification with Propylene Oxide >

The amount 0.1 g of the modified cellulose fibers obtained in Comparative Example 2 were supplied into 49.9 g of MEK, and subjected to the same dispersion treatment as in Example 1, to provide a fine modified cellulose dispersion in which finely fibrillated modified cellulose fibers were dispersed in MEK, a solid content concentration of which was 0.2% by mass.

Comparative Example 4 < Modification with Propylene Oxide >

The amount 0.1 g of the modified cellulose fibers obtained in Comparative Example 2 were supplied into 49.9 g of toluene, and subjected to the same dispersion treatment as in Example 1, to provide a fine modified cellulose dispersion in which finely fibrillated modified cellulose fibers were dispersed in toluene, a solid content concentration of which was 0.2% by mass.

Comparative Example 31 < Modification with Butylene Oxide >

The same procedures as in Example 1 were employed except that the reaction reagent was changed to butylene oxide manufactured by Wako Pure Chemical Industries, Ltd., and that the amount of the reagent was changed to 0.40 g (0.6 equivalents per AGU), to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Comparative Example 32 < Modification with Glycidyl Methyl Ether >

The same procedures as in Example 1 were employed except that the reaction reagent was changed to glycidyl methyl ether manufactured by Tokyo Chemical Industry Co., Ltd., and that the amount of the reagent was changed to 0.48 g (0.6 equivalents per AGU), to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Comparative Example 5 < Using Microfibrillated Cellulose (MFC) as Raw Material >

The same procedures as in Example 2 were employed except that the cellulose-based raw material was changed to 1.5 g of microfibrillated cellulose, as solid content, which was previously subjected to solvent replacement with DMF, manufactured by Daicel FineChem Ltd., "CELISH FD100-G," having a solid content concentration of 10% by mass, an average fiber size of 100 nm or less, a cellulose content of 90% by mass, and a water content of 3% by mass, and no solvents were additionally added, to provide modified cellulose fibers.

The amount 0.1 g of the modified cellulose fibers obtained were supplied into 49.9 g of DMF, and stirred with a magnetic stirrer at room temperature at 1,500 rpm for one hour, to provide a fine modified cellulose dispersion in which modified fine cellulose fibers were dispersed in DMF, a solid content concentration of which was 0.2% by mass.

Comparative Example 6 < Using Microfibrillated Cellulose (MFC) as Raw Material >

The same procedures as in Example 3 were employed except that the cellulose-based raw material was changed to 1.5 g of microfibrillated cellulose, as solid content, which was previously subjected to solvent replacement with DMF, manufactured by Daicel FineChem Ltd., "CELISH FD100-G," and no solvents were additionally added, to provide modified cellulose fibers.

The amount 0.1 g of the modified cellulose fibers obtained were supplied into 49.9 g of MEK, and stirred with a magnetic stirrer at room temperature at 1,500 rpm for one hour, to provide a fine modified cellulose dispersion in which modified fine cellulose fibers were dispersed in MEK, a solid content concentration of which was 0.2% by mass.

Comparative Example 7 < Using Microfibrillated Cellulose (MFC) as Raw Material >

The amount 0.1 g of the modified cellulose fibers obtained in Comparative Example 6 were supplied into 49.9 g of toluene, and stirred with a magnetic stirrer at room temperature at 1,500 rpm for one hour, to provide a fine modified cellulose dispersion in which modified fine cellulose fibers were dispersed in toluene, a solid content concentration of which was 0.2% by mass.

Example 10 < Using Bagasse as Raw Material >

The alkali-treated bagasse prepared in Production Example 1 of Cellulose-Based Raw Material was used for cellulose fibers. One hundred grams of the absolutely dried alkali-treated bagasse was supplied to a kneader manufactured by IRIE SHOKAI Co., Ltd., model PNV-1, capacity: 1.0 L equipped with a reflux tube and a dropping funnel, and 100 g of a 6.4% by mass aqueous sodium hydroxide solution (0.26 equivalent per AGU) and 100 g of isopropanol were sequentially added, and thereafter the mixture was homogeneously mixed while stirring at room temperature at 50 rpm for 30 minutes. Further, 92.7 g of 1,2-epoxyhexane (1.5 equivalents per AGU) was added dropwise in 1 minute, and the reaction was carried out at 70°C for 24 h under reflux conditions while stirring. After the reaction, the reaction mixture was neutralized with acetic acid manufactured by Wako Pure Chemical Industries, Ltd., and the mixture was sufficiently washed with a mixed solvent of water and isopropanol to remove impurities, and further vacuum-dried overnight at 50°C, to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Example 37 < Using LBKP as Raw Material >

The same procedures as in Example 10 were employed except that the raw material used was changed to broad-leaf bleached kraft pulp (hereinafter abbreviated as LBKP) derived from eucalyptus, manufactured by CENIBRA, in a fibrous form, having an average fiber size of 24 μm, a cellulose content of 90% by mass, and a water content of 5% by mass, to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Example 38 < Using HYP as Raw Material >

The same procedures as in Example 10 were employed except that the raw material used was changed to High Yield Pulp (hereinafter abbreviated as HYP) derived from spruce, manufactured by Rottneros, in a fibrous form, having an average fiber size of 28 μm, a cellulose content of 55% by mass, and a water content of 15% by mass, to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Example 39 < Using Powdery Cellulose A as Raw Material >

The same procedures as in Example 10 were employed except that the raw material used was changed to a powdery cellulose A obtained in Production Example 2 of Cellulose-Based Raw Material, to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Example 11 < Using Bagasse as Raw Material >

The same procedures as in Example 3 were employed except that the starting raw material was changed to an alkali-treated bagasse prepared in Production Example 1 of Cellulose-Based Raw Material, to provide modified cellulose fibers.

The amount 0.1 g of the modified cellulose fibers obtained were supplied into 49.9 g of MEK, and subjected to the same dispersion treatment as in Example 1, to provide a fine modified cellulose dispersion in which finely fibrillated modified cellulose fibers were dispersed in MEK, a solid content concentration of which was 0.2% by mass.

Comparative Example 8 < Unreacted Bagasse >

The amount 0.1 g of the alkali-treated bagasse prepared in Production Example 1 of Cellulose-Based Raw Material was directly supplied in 49.9 g of DMF, and the mixture was subjected to the same dispersion treatment as in Example 1, to provide a fine cellulose dispersion in which finely fibrillated cellulose fibers were dispersed in DMF, a solid content concentration of which was 0.2% by mass.

Comparative Example 9 < Modification with Propylene Oxide >

The same procedures as in Example 10 were employed except that the reaction reagent was changed to propylene oxide, and that the amount of the reagent was changed to 0.16 g (0.3 equivalents per AGU), to provide modified cellulose fibers.

The amount 0.1 g of the modified cellulose fibers obtained were supplied into 49.9 g of DMF, and subjected to the same dispersion treatment as in Example 1, to provide a fine modified cellulose dispersion in which finely fibrillated modified cellulose fibers were dispersed in DMF, a solid content concentration of which was 0.2% by mass.

Referential Example 1

When the viscosity measurement was made for DMF, MEK, and toluene used in the above Examples and Comparative Examples, the found viscosities in the present measurement conditions were below the lower limit of measurements (N.D.).

Example 13 < Melt-Kneading Composite of Modified Cellulose Fibers and Polyethylene >

Eighty grams of a polyethylene manufactured by Japan Polyethylene Corporation, Novatec LL UF641 and 8.0 g of the modified cellulose fibers obtained in Example 10 were sequentially added, and the mixture was kneaded with a kneader Labo-plasto mill, manufactured by TOYO SEIKI SEISAKU-SHO, at a rotational speed of 50 rpm, at 240°C for 8 minutes, to provide a homogeneous mixture. The homogeneous mixture was sequentially pressed with a pressing machine "Labo-press" manufactured by TOYO SEIKI SEISAKU-SHO under conditions of 240°C, 0.4 MPa for 1 minute, 20 MPa for 1 minute, and then at 80°C, 0.4 MPa for 1 minute, to produce a sheet-like composite material molded article having a thickness of about 0.4 mm, containing 10% by mass of modified cellulose fibers, based on the polyethylene resin.

Example 40 < Melt-Kneading Composite of Modified Cellulose Fibers and Polyethylene >

The same treatments as in Example 13 were carried out, except that the modified cellulose fibers used were changed to the modified cellulose fibers obtained in Example 2, to produce a sheet-like composite material molded article having a thickness of about 0.4 mm, containing 10% by mass of modified cellulose fibers, based on the polyethylene resin.

Example 41 < Melt-Kneading Composite of Modified Cellulose Fibers (Pulverized Product) and Polyethylene >

The same treatments as in Example 13 were carried out except that 8.0 g of the powdered modified cellulose fibers obtained by previously supplying 100 g of the modified cellulose fibers obtained in Example 2 (dry basis) into a batch-type vibrating mill "MB-1" manufactured by CHUO KAKOHKI CO., LTD, having a reactor entire volume of 3.5 L, using 13 rods made of SUS304 having a diameter φ of 30 mm, a length of 218 mm, a cross-sectional shape of circular, and a rod filling ratio of 57%, and subjecting the contents to a pulverization treatment for 20 minutes were used, to produce a sheet-like composite material molded article having a thickness of about 0.4 mm, containing 10% by mass of modified cellulose fibers, based on the polyethylene resin.

Example 42 < Melt-Kneading Composite of Modified Cellulose Fibers and Polyethylene >

The same treatments as in Example 13 were carried out except that the modified cellulose fibers used were changed to the modified cellulose fibers obtained in Example 31, to produce a sheet-like composite material molded article having a thickness of about 0.4 mm, containing 10% by mass of modified cellulose fibers, based on the polyethylene resin.

Example 43 < Melt-Kneading Composite of Modified Cellulose Fibers and Polyethylene >

The same treatments as in Example 13 were carried out except that the modified cellulose fibers used were changed to the modified cellulose fibers obtained in Example 36, to produce a sheet-like composite material molded article having a thickness of about 0.4 mm, containing 10% by mass of modified cellulose fibers, based on the polyethylene resin.

Comparative Example 10 < Polyethylene Blank >

The same treatments as in Example 13 were carried out except that the modified cellulose fibers were not used, to produce a sheet-like polyethylene resin molded article having a thickness of about 0.4 mm.

Comparative Example 33 < Melt-Kneading Composite of Modified Cellulose Fibers and Polyethylene >

The same treatments as in Example 13 were carried out except that the modified cellulose fibers used were changed to the modified cellulose fibers obtained in Comparative Example 2, to produce a sheet-like composite material molded article having a thickness of about 0.4 mm, containing 10% by mass of modified cellulose fibers, based on the polyethylene resin.

Example 14 < Composite of Modified Cellulose Fibers and Epoxy Resin >

The amount 0.25 g of the modified cellulose fibers obtained in Example 10 were supplied into 49.75 g of DMF, and subjected to the same dispersion treatment as in Example 1, to provide a fine modified cellulose dispersion in which finely fibrillated modified cellulose fibers were dispersed in DMF, a solid content concentration of which was 0.5% by mass. Fifty grams of the dispersion and 2.5 g of an epoxy resin jER828 manufactured by Mitsubishi Chemical Co., Ltd. were mixed, and the mixture was subjected to a finely fibrillating treatment with a high-pressure homogenizer by carrying out a 1-pass treatment at 60 MPa, and 1-pass treatment at 100 MPa. To the solution obtained was added 0.4 g of a curing agent 2-ethyl-4-methylimidazole manufactured by Wako Pure Chemical Industries, Ltd., and agitated for 7 minutes with a planetary centrifugal agitator Awatori Rentaro manufactured by THINKY CORPORATION. The varnish obtained was applied in a coating thickness of 2 mm with a bar coater. The coating was dried at 100°C for 1 hour, to remove the solvent, and then thermally cured at 150°C for 2 hours, to produce a sheet-like composite material molded article having a thickness of about 0.2 mm, containing 10% by mass of fine modified cellulose fibers, based on the epoxy resin.

Example 44 < Composite of Modified Cellulose Fibers and Epoxy Resin >

The same treatments as in Example 14 were carried out except that the modified cellulose fibers used were changed to the modified cellulose fibers prepared in Example 1, to produce a sheet-like composite material molded article having a thickness of about 0.1 mm, containing 10% by mass of fine modified cellulose fibers, based on the epoxy resin.

Comparative Example 11 < Epoxy Resin Blank >

The same treatments as in Example 14 were carried out except that 10 mL of DMF was used in place of the modified cellulose fiber dispersion, and that the coating thickness was changed to 0.5 mm, to produce a sheet-like epoxy resin molded article having a thickness of about 0.2 mm.

Example 15 < Composite of Modified Cellulose Fibers and Acrylic Resin >

The amount 0.25 g of the modified cellulose fibers obtained in Example 2 were supplied into 49.75 g of DMF, and subjected to the same dispersion treatment as in Example 1, to provide a fine modified cellulose dispersion in which finely fibrillated modified cellulose fibers were dispersed in DMF, a solid content concentration of which was 0.5% by

mass. Forty grams of the dispersion and 2.0 g of an urethane acrylate resin UV-3310B manufactured by The Nippon Synthetic Chemical Industry Co., Ltd. were mixed, and the mixture was subjected to a finely fibrillating treatment with a high-pressure homogenizer by carrying out a 1-pass treatment at 60 MPa, and a 1-pass treatment at 100 MPa. As a photopolymerization initiator, 0.08 g of 1-hydroxy-cyclohexyl-phenyl-ketone manufactured by Wako Pure Chemical Industries, Ltd. was added thereto, and the contents were agitated for 7 minutes with a planetary centrifugal agitator Awatori Rentaro manufactured by THINKY CORPORATION. The varnish obtained was applied in a coating thickness of 2 mm with a bar coater. The coating was dried at 80°C for 120 minutes, to remove the solvent, and irradiated with a UV irradiation apparatus Light Hammer 10, manufactured by Fusion Systems Japan, at 200 mJ/$cm^2$ to photo-cure, to produce a sheet-like composite material molded article having a thickness of about 0.1 mm, containing 10% by mass of fine modified cellulose fibers, based on the acrylic resin.

Example 16 < Composite of Modified Cellulose Fibers and Acrylic Resin >

The same treatments as in Example 15 were carried out except that the modified cellulose fibers used were changed to the modified cellulose fibers prepared in Example 3, and that the solvent used was changed to MEK, to produce a sheet-like composite material molded article having a thickness of about 0.1 mm, containing 10% by mass of fine modified cellulose fibers, based on the acrylic resin.

Example 45 < Composite of Modified Cellulose Fibers and Acrylic Resin >

The same treatments as in Example 15 were carried out except that the modified cellulose fibers used were changed to the modified cellulose fibers prepared in Example 31, and that the solvent used was changed to toluene, to produce a sheet-like composite material molded article having a thickness of about 0.1 mm, containing 10% by mass of fine modified cellulose fibers, based on the acrylic resin.

Example 46 < Composite of Modified Cellulose Fibers and Acrylic Resin >

The same treatments as in Example 15 were carried out except that the modified cellulose fibers used were changed to the modified cellulose fibers prepared in Example 32, to produce a sheet-like composite material molded article having a thickness of about 0.1 mm, containing 10% by mass of fine modified cellulose fibers, based on the acrylic resin.

Example 47 < Composite of Modified Cellulose Fibers and Acrylic Resin >

The same treatments as in Example 15 were carried out except that the modified cellulose fibers used were changed to the modified cellulose fibers prepared in Example 33, to produce a sheet-like composite material molded article having a thickness of about 0.1 mm, containing 10% by mass of fine modified cellulose fibers, based on the acrylic resin.

Example 48 < Composite of Modified Cellulose Fibers and Acrylic Resin >

The same treatments as in Example 15 were carried out except that the modified cellulose fibers used were changed to the modified cellulose fibers prepared in Example 36, and that the solvent used was changed to toluene, to produce a sheet-like composite material molded article having a thickness of about 0.1 mm, containing 10% by mass of fine modified cellulose fibers, based on the acrylic resin.

Example 17 < Composite of Modified Cellulose Fibers and Acrylic Resin >

The same treatments as in Example 15 were carried out except that the modified cellulose fibers used were changed to the modified cellulose fibers prepared in Example 9, and that the solvent used was changed to MEK, to produce a sheet-like composite material molded article having a thickness of about 0.1 mm, containing 10% by mass of fine modified cellulose fibers, based on the acrylic resin.

Example 49 < Composite of Modified Cellulose Fibers and Acrylic Resin >

The same treatments as in Example 15 were carried out except that the modified cellulose fibers used were changed to the modified cellulose fibers prepared in Example 37, to produce a sheet-like composite material molded article having a thickness of about 0.1 mm, containing 10% by mass of fine modified cellulose fibers, based on the acrylic

resin.

Example 50 < Composite of Modified Cellulose Fibers and Acrylic Resin >

The same treatments as in Example 15 were carried out except that the modified cellulose fibers used were changed to the modified cellulose fibers prepared in Example 38, to produce a sheet-like composite material molded article having a thickness of about 0.1 mm, containing 10% by mass of fine modified cellulose fibers, based on the acrylic resin.

Example 51 < Composite of Modified Cellulose Fibers and Acrylic Resin >

The same treatments as in Example 15 were carried out except that the modified cellulose fibers used were changed to the modified cellulose fibers prepared in Example 39, to produce a sheet-like composite material molded article having a thickness of about 0.1 mm, containing 10% by mass of fine modified cellulose fibers, based on the acrylic resin.

Comparative Example 12 < Acrylic Resin Blank >

The same treatments as in Example 15 were carried out except that 10 mL of MEK was used in place of the modified cellulose fiber dispersion, and that a coating thickness was changed to 0.5 mm, to give a sheet-like acrylic resin molded article having a thickness of about 0.1 mm.

Example 18 < Composite of Modified Cellulose Fibers and Polystyrene Resin >

The amount 0.50 g of the modified cellulose fibers obtained in Example 2 were supplied in 49.50 g of DMF, and the mixture was stirred with a homogenizer at 3,000 rpm for 30 minutes. Thereafter, the mixture was subjected to a 10-pass treatment at 100 MPa with a high-pressure homogenizer, to provide a fine modified cellulose dispersion in which finely fibrillated modified cellulose fibers were dispersed in DMF, a solid content concentration of which was 1.0% by mass.

Fifteen grams of the fine modified cellulose dispersion obtained above, 1.5 g of a polystyrene resin manufactured by Sigma-Aldrich, number-average molecular weight: 170,000, Product Number: 441147-1KG, and 30 g of DMF were mixed, and stirred with a magnetic stirrer at room temperature and 1,500 rpm for 12 hours. Thereafter, the mixture was subjected to a finely fibrillating treatment with a high-pressure homogenizer by carrying out a 1-pass treatment at 60 MPa and a 1-pass treatment at 100 MPa. Thereafter, the mixture was agitated for 7 minutes with a planetary centrifugal agitator Awatori Rentaro manufactured by THINKY CORPORATION. The varnish obtained was supplied to a glass petri dish having a diameter of 9 cm, and dried at 100°C for 12 hours to remove the solvent, to produce a sheet-like composite material molded article having a thickness of about 0.2 mm, containing 10% by mass of fine modified cellulose fibers, based on the polystyrene resin.

Comparative Example 13 < Polystyrene Resin Blank >

The same treatments as in Example 18 were carried out except that 15 g of DMF was used in place of the modified cellulose fiber dispersion, to give a sheet-like polystyrene resin molded article having a thickness of about 0.2 mm.

The modified cellulose fibers obtained were evaluated for substituent introduction ratio, average fiber size (including average fiber size of the cellulose-based raw material), average fiber size after fine fibrillation, and confirmation of the crystal structure (crystallinity) in accordance with the methods of the following Test Examples 1 to 4. In addition, the properties of the dispersion were evaluated in accordance with the methods of the following Test Examples 5 and 6, and the properties of the molded article were evaluated in accordance with the following Test Examples 7 to 9. The results are shown in Tables 1 to 9.

Test Example 1 - Substituent Introduction Ratio, Degree of Substitution

The % content (% by mass) of the hydrophobic ether group contained in the modified cellulose fibers obtained was calculated in accordance with Zeisel method, which has been known as a method of analyzing an average number of moles added of alkoxy groups of the cellulose ethers described in Analytical Chemistry, 51(13), 2172 (1979), "Fifteenth Revised Japan Pharmacopeia (Section of Method of Analyzing Hydroxypropyl Cellulose)" or the like. The procedures are shown hereinbelow.

(i) To a 200 mL volumetric flask was added 0.1 g of n-octadecane, and filled up with hexane to a marked line, to provide an internal standard solution.

(ii) One-hundred milligrams of modified cellulose fibers previously purified and dried, and 100 mg of adipic acid were accurately weighed in a 10 mL vial jar, 2 mL of hydrogen iodide was added thereto, and the vial jar was tightly sealed.

(iii) The mixture in the above vial jar was heated with a block heater at 160°C for 1 hour, while stirring with stirrer chips.

(iv) After heating, 3 mL of the internal standard solution and 3 mL of diethyl ether were sequentially injected to the vial, and a liquid mixture was stirred at room temperature for 1 minute.

(v) An upper layer (diethyl ether layer) of the mixture separated in two layers in the vial jar was analyzed by gas chromatography with "GC2010Plus," manufactured by SHIMADZU Corporation. The analytical conditions were as follows:

Column: DB-5, manufactured by Agilent Technologies (12 m, 0.2 mm × 0.33 μm
Column Temperature: 100°C, heating at 10°C/min, to 280°C (holding for 10 min)
Injector Temperature: 300°C, detector temperature: 300°C, input amount: 1 μL

The content of the ether groups in the modified cellulose fibers (% by mass) was calculated from a detected amount of the etherification reagent used.

From the ether group content obtained, the molar substitution (MS), amount of moles of substituents based on one mol of the anhydrous glucose unit, was calculated using the following formula (1):

(Formula 1)

$$MS = (W1/Mw)/((100-W1)/162.14)$$

W1: The content of the ether groups in the modified cellulose fibers, % by mass
Mw: The molecular weight of the introduced etherification reagent, g/mol

Test Example 2 - Average Fiber Sizes of Modified Cellulose Fibers and Cellulose-Based Raw Material

The average fiber sizes of the modified cellulose fibers and the cellulose-based raw material were obtained by the following method. About 0.3 g of an absolutely dried sample was accurately weighed, and stirred in 1.0 L of ion-exchanged water with a household mixer for one minute, to defibriate the fibers in water. Thereafter, 4.0 L of ion-exchanged water was further added, and the mixture was stirred to make it homogeneous. From the aqueous dispersion obtained, about 50 g was collected and accurately weighed as the measurement liquid. The measurement liquid was analyzed by "Kajaani Fiber Lab" manufactured by Metso Automation, to provide an average fiber size.

Test Example 3 - Average Fiber Size of Fine Modified Cellulose Fibers

The dispersion obtained was observed with an optical microscope "Digital Microscope VHX-1000" manufactured by KEYENCE at a magnification of from 300 to 1,000, and calculating an average of 30 or more of fiber strands (calculated by rounding off to a first decimal as a significant digit). In a case where observation with an optical microscope was difficult, a solvent was further added to the cellulose fiber dispersion to provide a 0.0001% by mass dispersion, and the dispersion was dropped on mica and dried to provide an observation sample, and a fiber height of the cellulose fibers in the observation sample was measured with an interatomic force microscope (AFM), Nanoscope III Tapping mode AFM, manufactured by Digital Instrument, the probe Point Probe (NCH) manufactured by NANOSENSORS being used. During the measurements, five or more sets of fine cellulose fibers were extracted from a microscopic image in which the cellulose fibers could be confirmed, and an average fiber size, a fiber size in the dispersion, was calculated from those fiber heights. Here, a case where fibers were aggregated in a dispersion to make analysis impossible is listed as "> 10,000."

Test Example 4 - Confirmation of Crystal Structure

The crystal structure of the modified cellulose fibers was confirmed by measuring with "Rigaku RINT 2500VC X-RAY diffractometer" manufactured by Rigaku Corporation. The measurement conditions were as follows: X-ray source: Cu/Kα-radiation, tube voltage: 40 kV, tube current: 120 mA, measurement range: diffraction angle 2θ = 5° to 45°, scanning speed of X-ray: 10°/min. A sample for the measurement was prepared by compressing pellets to a size having an area of 320 $mm^2$ and a thickness of 1 mm. Also, as to the crystallinity of the cellulose I crystal structure, X-ray diffraction

intensity was calculated by the following formula (A).

$$\text{Cellulose I Crystallinity (\%)} = [(I22.6\text{-}I18.5)/I22.6] \times 100 \qquad (A)$$

wherein I22.6 is a diffraction intensity of a lattice face (face 002)(angle of diffraction 2θ = 22.6°), and I18.5 is a diffraction intensity of an amorphous portion (angle of diffraction 2θ = 18.5°), in X-ray diffraction.

On the other hand, in a case where a crystallinity obtained by the above formula (A) is 35% or less, it is preferable to use a calculated value based on the formula (B) given below as a crystallinity, in accordance with the description of P199-200 of "Mokushitsu Kagaku Jikken Manyuaru (Wood Science Experimental Manual)," edited by The Japan Wood Research Society, from the viewpoint of improving the calculation accuracy.

Therefore, in a case where a crystallinity obtained by the above formula (A) is 35% or less, a calculated value based on the following formula (B) can be used as a crystallinity:

$$\text{Cellulose I Crystallinity (\%)} = [Ac/(Ac+Aa)] \times 100 \qquad (B)$$

wherein Ac is a total sum of peak areas of a lattice face (002 face)(angle of diffraction 2θ = 22.6°), a lattice face (011 face)(angle of diffraction 2θ = 15.1°), and a lattice face (0-11 face)(angle of diffraction 2θ = 16.2°), Aa is a peak area of an amorphous portion (angle of diffraction 2θ = 18.5°), each peak area being calculated by fitting the X-ray diffraction chart to a Gaussian function, in X-ray diffraction.

Test Example 5 - Dispersion Stability Test

A cellulose fiber dispersion having a solid content concentration of 0.2% by mass was allowed to stand at room temperature for one week, and the presence or absence of the precipitations was visually confirmed, and evaluated in accordance with the following ranking criteria.:

Rank A: No precipitates.
Rank B: Partly precipitates were confirmed.
Rank C: Entire amount was precipitated (complete separation).

The dispersion stability was evaluated in the order of A > B > C, and dispersion stability A shows excellent dispersion stability.

Test Example 6 - Viscosity Measurement

The viscosity of a cellulose fiber dispersion having a solid content concentration of 0.2% by mass was measured with an E-type viscometer "VISCOMETER TVE-35H" manufactured by TOKI SANGYO CO., LTD., using cone rotor: 1°34' × R24, and a temperature-controller "VISCOMATE VM-150III" manufactured by TOKI SANGYO CO., LTD., under the conditions of 25°C, 1 rpm, and one minute. In a case where the measured viscosity is 15 mPa•s or more, excellent thickening effects are shown, and it is shown that the higher the values, the more excellent the thickening properties. Here, when the viscosity was below the lower limit of measurements to make the analysis impossible, it was listed as "N. D."

Test Example 7 - Tensile Modulus

In a thermostatic chamber at 25°C, a tensile modulus of a molded article was measured according to a tensile test as prescribed in JIS K7113 with a tensile compression tester "Autograph AGS-X" manufactured by SHIMADZU Corporation. Samples punched through with No. 2 dumbbell were set apart with a span of 80 mm at a crosshead speed of 10 mm/min. It is shown that the higher the tensile moduli, the more excellent the mechanical strength.

Test Example 8 - Storage Modulus

Using a dynamic viscoelastometer "DMS6100," manufactured by SII, the storage modulus of a rectangular sample cut out to have a width of 5 mm and a length of 20 mm from the molded article obtained was measured in tensile mode while raising the temperature from -50°C to 200°C in a rate of 2°C per minute in a nitrogen atmosphere at a frequency of 1 Hz. The storage modulus each listed in the table is a value at a temperature equal to or higher than the glass transition temperature of the resin used (shown in parenthesis), and the higher the storage moduli (MPa), the more

excellent the strength at high temperatures, so that it is shown that the higher the strength, the more excellent the heat resistance.

Test Example 9 - Coefficient of Linear Thermal Expansion (CTE)

Using a thermal stress-strain measurement apparatus "EXSTAR TMA/SS6100" manufactured by Seiko Instruments, Inc., the measurements were taken with a rectangular sample having a width of 3 mm and a length of 20 mm, which was subjected to temperature elevation at a rate of 5°C per minute under nitrogen atmosphere in a tensile mode, with applying a load of 25 g. The coefficient of linear thermal expansion (CTE) is obtained by calculating an average coefficient of linear thermal expansion within a given temperature range. The number within the parenthesis listed in the tables shows a temperature range used in the calculation, and it is shown that the lower the CTE, the more excellent the dimensional stability.

[Table 1]

Table 1

| | | | | Comparative Examples | | | | Examples | | | | | |
|---|---|---|---|---|---|---|---|---|---|---|---|---|---|
| | | | | 2 | 3 | 4 | 31 | 1 | 2 | 3 | 4 | 7 | 31 |
| Modified Cellulose Fibers | Average Fiber Size, μm | | | 24 | 24 | 24 | 24 | 24 | 25 | 24 | 24 | 23 | 23 |
| | Substituent | Formula (1) | $R_1$ | $-CH_3$ | $-CH_3$ | $-CH_3$ | $-C_2H_5$ | $-C_4H_9$ | $-C_4H_9$ | $-C_8H_{17}$ | $-C_8H_{17}$ | $-C_{16}H_{33}$ | $-C_{16}H_{33}$ |
| | | | Degree of Substitution | 0.15 | 0.15 | 0.15 | 0.27 | 0.20 | 0.46 | 0.40 | 0.40 | 0.03 | 0.24 |
| | | Formula (2) | $R_1$ | - | - | - | - | - | - | - | - | - | - |
| | | | n | - | - | - | - | - | - | - | - | - | - |
| | | | A | - | - | - | - | - | - | - | - | - | - |
| | | | Degree of Substitution | - | - | - | - | - | - | - | - | - | - |
| | Cellulose Crystal Form | | | I | I | I | I | I | I | I | I | I | I |
| | Crystallinity, % | | | 57 | 57 | 57 | 56 | 57 | 48 | 51 | 51 | 51 | 56 |
| | Raw Material Cellulose | | | NBKP | NBKP | NBKP | NBKP | NBKP | NBKP | NBKP | NBKP | NBKP | NBKP |
| Dispersion | Dispersion Medium | | | DMF | MEK | Toluene | DMF | DMF | DMF | MEK | Toluene | Toluene | Toluene |
| | Dispersion Stability | | | C | C | C | C | A | A | A | A | A | A |
| | Fiber Size in Dispersion, nm | | | >10,000 | >10,000 | >10,000 | >10,000 | 24 | 23 | 61 | 70 | 120 | 78 |
| | Viscosity at 25°C, mPa•s | | | N.D. | N.D. | N.D. | 8 | 136 | 256 | 303 | 197 | 51 | 124 |

[Table 2]

Table 2

| | | | | Comparative Examples | | |
|---|---|---|---|---|---|---|
| | | | | 5 | 6 | 7 |
| Modified Cellulose Fibers | Average Fiber Size, μm | | | ≤0.1 | ≤ 0.1 | ≤0.1 |
| | Substituent | Formula (1) | $R_1$ | $-C_4H_9$ | $-C_8H_{17}$ | $-C_8H_{17}$ |
| | | | Degree of Substitution | 0.23 | 0.19 | 0.19 |
| | | Formula (2) | $R_1$ | | | - |
| | | | N | - | - | |
| | | | A | - | - | - |
| | | | Degree of Substitution | - | - | - |
| | Cellulose Crystal Form | | | I | I | I |
| | Crystallinity, % | | | 47 | 48 | 48 |
| | Raw Material Cellulose | | | MFC | MFC | MFC |
| Dispersion | Dispersion Medium | | | DMF | MEK | Toluene |
| | Dispersion Stability | | | C | C | C |
| | Fiber Size in Dispersion, nm | | | 50 | N.D. | N.D. |
| | Viscosity at 25°C, mPa•s | | | N.D. | N.D. | N.D. |

[Table 3]

Table 3

| | | | | Comparative Example | Examples | | | | | | | Comparative Example |
|---|---|---|---|---|---|---|---|---|---|---|---|---|
| | | | | 32 | 32 | 33 | 34 | 35 | 8 | 36 | 9 | 1 |
| Modified Cellulose Fibers | Average Fiber Size, μm | | | 24 | 24 | 24 | 24 | 24 | 24 | 24 | 24 | 24 |
| | Substituent | Formula (1) | $R_1$ | - | - | - | - | - | - | - | - | - |
| | | | Degree of Substitution | - | - | - | - | - | - | - | - | - |
| | | Formula (2) | $R_1$ | $-CH_3$ | $-C_4H_9$ | $-C_8H_{17}$ | $-C_{12}H_{25}$ | $-C_{12}H_{25}$ | $-C_{18}H_{37}$ | $-C_{18}H_{37}$ | $-C_{12}H_{25}$ | - |
| | | | n | 0 | 0 | 0 | 0 | 0 | 0 | 0 | 13 | - |
| | | | A | - | - | - | - | - | - | - | $-CH_2CH_2O-$ | - |
| | | | Degree of Substitution | 0.35 | 0.57 | 0.10 | 0.16 | 0.16 | 0.02 | 0.30 | 0.01 | - |
| | Cellulose Crystal Form | | | I | I | I | I | I | I | I | I | I |
| | Crystallinity, % | | | 55 | 57 | 52 | 51 | 51 | 56 | 55 | 55 | 59 |
| | Raw Material Cellulose | | | NBKP | NBKP | NBKP | NBKP | NBKP | NBKP | NBKP | NBKP | NBKP |
| Dispersion | Dispersion Medium | | | DMF | DMF | DMF | DMF | MEK | Toluene | Toluene | MEK | DMF |
| | Dispersion Stability | | | C | A | A | A | A | A | A | A | C |
| | Fiber Size in Dispersion, nm | | | >10,000 | 25 | 24 | 32 | 28 | 110 | 81 | 52 | >10,000 |
| | Viscosity at 25°C, mPa•s | | | N. D. | 143 | 961 | 681 | 809 | 24 | 140 | 313 | N. D. |

[Table 4]

Table 4

| | | | | Examples | | | | | | Comparative Example | Example | Comparative Examples | |
|---|---|---|---|---|---|---|---|---|---|---|---|---|---|
| | | | | 1 | 2 | 10 | 37 | 38 | 39 | 5 | 11 | 8 | 9 |
| Modified Cellulose Fibers | Average Fiber Size, μm | | | 24 | 25 | 23 | 24 | 28 | 25 | ≤0.1 | 23 | 24 | 22 |
| | Substituent | Formula (1) | $R_1$ | $-C_4H_9$ | $-C_4H_9$ | $-C_4H_9$ | $-C_4H_9$ | $-C_4H_9$ | $-C_4H_9$ | $-C_4H_9$ | $-C_8H_{17}$ | - | $-CH_3$ |
| | | | Degree of Substitution | 0.20 | 0.46 | 0.22 | 0.26 | 0.35 | 0.28 | 0.23 | 0.50 | - | 0.32 |
| | | Formula (2) | $R_1$ | - | - | - | - | - | - | - | - | - | - |
| | | | n | - | - | - | - | - | - | - | - | - | - |
| | | | A | - | - | - | - | - | - | - | - | - | - |
| | | | Degree of Substitution | - | - | - | - | - | - | - | - | - | - |
| | Cellulose Crystal Form | | | I | I | I | I | I | I | I | I | I | I |
| | Crystallinity, % | | | 57 | 48 | 38 | 60 | 49 | 35 | 47 | 30 | 39 | 38 |
| | Raw Material Cellulose | | | NBKP | NBKP | Bagasse | LBKP | HYP | Powdery Cellulose A | MFC | Bagasse | Bagasse | Bagasse |
| Dispersion | Dispersion Medium | | | DMF | DMF | DMF | DMF | DMF | DMF | DMF | MEK | DMF | DMF |
| | Dispersion Stability | | | A | A | A | A | A | A | C | A | C | C |
| | Fiber Size in Dispersion, nm | | | 24 | 23 | 23 | 24 | 22 | 23 | 50 | 70 | >10,000 | >10,000 |
| | Viscosity at 25°C, mPa•s | | | 136 | 256 | 290 | 201 | 242 | 87 | N. D. | 280 | N. D. | N. D. |

[Table 5]

Table 5

| | | | | Comparative Example | Examples | | | | | Comparative Example |
|---|---|---|---|---|---|---|---|---|---|---|
| | | | | 33 | 13 | 40 | 41 | 42 | 43 | 10 |
| Modified Cellulose Fibers | Average Fiber Size, μm | | | 24 | 23 | 25 | 50 | 23 | 24 | - |
| | Substituent | Formula (1) | $R_1$ | $-CH_3$ | $-C_4H_9$ | $-C_4H_9$ | $-C_4H_9$ | $-C_{16}H_{33}$ | - | - |
| | | | Degree of Substitution | 0.15 | 0.22 | 0.46 | 0.46 | 0.24 | - | - |
| | | Formula (2) | $R_1$ | - | - | - | - | - | $-C_{18}H_{37}$ | |
| | | | n | - | - | - | - | - | 0 | - |
| | | | A | - | - | - | - | - | - | - |
| | | | Degree of Substitution | - | - | - | - | - | 0.30 | - |
| | Cellulose Crystal Form | | | I | I | I | I | I | I | - |
| | Crystallinity, % | | | 57 | 38 | 48 | 40 | 56 | 55 | - |
| | Raw Material Cellulose | | | NBKP | Bagasse | NBKP | NBKP | NBKP | NBKP | - |
| | Pretreatment Before Mixing | | | None | None | None | Vibrating Mill | None | None | - |
| | Content, Based on 100 Parts by Mass of Resin | | | 10 | 10 | 10 | 10 | 10 | 10 | 0 |
| Molded Article | Resin | | | Polyethylene | Polyethylene | Polyethylene | Polyethylene | Polyethylene | Polyethylene | Polyethylene |
| | Mixing Method | | | Melt-kneading | Melt-kneading | Melt-kneading | Melt-kneading | Melt-kneading | Melt-kneading | Melt-kneading |
| | Molding Method | | | Heat pressing | Heat pressing | Heat pressing | Heat pressing | Heat pressing | Heat pressing | Heat pressing |
| | Tensile Modulus, MPa | | | 405 | 1,000 | 1,110 | 1,280 | 1,310 | 1,350 | 394 |

[Table 6]

Table 6

<table>
<tr><td colspan="4" rowspan="2"></td><td colspan="2">Examples</td><td>Comparative Example</td></tr>
<tr><td>14</td><td>44</td><td>11</td></tr>
<tr><td rowspan="12">Modified Cellulose Fibers</td><td colspan="3">Average Fiber Size, μm</td><td>23</td><td>24</td><td>-</td></tr>
<tr><td rowspan="6">Substituent</td><td rowspan="2">Formula (1)</td><td>$R_1$</td><td>$-C_4H_9$</td><td>$-C_4H_9$</td><td>-</td></tr>
<tr><td>Degree of Substitution</td><td>0.22</td><td>0.20</td><td>-</td></tr>
<tr><td rowspan="4">Formula (2)</td><td>$R_1$</td><td>-</td><td>-</td><td>-</td></tr>
<tr><td>n</td><td></td><td></td><td></td></tr>
<tr><td>A</td><td>-</td><td>-</td><td>-</td></tr>
<tr><td>Degree of Substitution</td><td>-</td><td>-</td><td>-</td></tr>
<tr><td colspan="3">Cellulose Crystal Form</td><td>I</td><td>I</td><td>-</td></tr>
<tr><td colspan="3">Crystallinity, %</td><td>38</td><td>57</td><td>-</td></tr>
<tr><td colspan="3">Raw Material Cellulose</td><td>Bagasse</td><td>NBKP</td><td>-</td></tr>
<tr><td colspan="3">Content, Based on 100 Parts by Mass of Resin</td><td>10</td><td>10</td><td>0</td></tr>
<tr><td rowspan="5">Molded Article</td><td colspan="3">Resin</td><td>Epoxy</td><td>Epoxy</td><td>Epoxy</td></tr>
<tr><td colspan="3">Mixing Method</td><td>Solution mixing</td><td>Solution mixing</td><td>Solution mixing</td></tr>
<tr><td colspan="3">Molding Method</td><td>Casting</td><td>Casting</td><td>Casting</td></tr>
<tr><td colspan="3">Storage Modulus, MPa</td><td>300 (200°C)</td><td>315 (200°C)</td><td>118 (200°C)</td></tr>
<tr><td colspan="3">CTE, ppm/K</td><td>61 (150-180°C)</td><td>55 (1 50-180°C)</td><td>183 (150-180°C)</td></tr>
</table>

[Table 7]

Table 7

| | | | | Examples | | | | | | | Comparative Example |
|---|---|---|---|---|---|---|---|---|---|---|---|
| | | | | 15 | 16 | 45 | 46 | 47 | 48 | 17 | 12 |
| Modified Cellulose Fibers | Average Fiber Size, μm | | | 25 | 24 | 23 | 24 | 24 | 24 | 24 | - |
| | Substituent | Formula (1) | $R_1$ | $-C_4H_9$ | $-C_8H_{17}$ | $-C_{16}H_{33}$ | - | - | - | - | - |
| | | | Degree of Substitution | 0.46 | 0.40 | 0.24 | - | - | - | - | - |
| | | Formula (2) | $R_1$ | - | - | - | $-C_4H_9$ | $-C_8H_{17}$ | $-C_{18}H_{37}$ | $-C_{12}H_{25}$ | - |
| | | | n | - | - | - | 0 | 0 | 0 | 13 | - |
| | | | A | - | - | - | - | - | - | $-CH_2CH_2O-$ | - |
| | | | Degree of Substitution | - | - | - | 0.57 | 0.10 | 0.30 | 0.01 | - |
| | Cellulose Crystal Form | | | I | I | I | I | I | I | I | - |
| | Crystallinity, % | | | 48 | 51 | 56 | 57 | 52 | 55 | 55 | - |
| | Raw Material Cellulose | | | NBKP | NBKP | NBKP | NBKP | NBKP | NBKP | NBKP | - |
| | Content, Based on 100 Parts by Mass of Resin | | | 10 | 10 | 10 | 10 | 10 | 10 | 10 | 0 |
| Molded Article | Resin | | | Acrylic | Acrylic | Acrylic | Acrylic | Acrylic | Acrylic | Acrylic | Acrylic |
| | Mixing Method | | | Solution-mixing | Solution-mixing | Solution-mixing | Solution-mixing | Solution-mixing | Solution-mixing | Solution-mixing | Solution-mixing |
| | Molding Method | | | Casting | Casting | Casting | Casting | Casting | Casting | Casting | Casting |
| | Storage Modulus, MPa | | | 30 (150°C) | 95 (150°C) | 181 (150°C) | 21 (150°C) | 75 (150°C) | 210 (150°C) | 205 (150°C) | 14 (150°C) |
| | CTE, ppm/K | | | 79 (50-100°C) | 118 (50-100°C) | 73 (50-100°C) | 145 (50-100°C) | 83 (50-100°C) | 38 (50-100°C) | 71 (50-100°C) | 194 (50-100°C) |

[Table 8]

Table 8

| | | | | Examples | | | |
|---|---|---|---|---|---|---|---|
| | | | | 15 | 49 | 50 | 51 |
| Modified Cellulose Fibers | Average Fiber Size, μm | | | 25 | 24 | 28 | 25 |
| | Substituent | Formula (1) | $R_1$ | $-C_4H_9$ | $-C_4H_9$ | $-C_4H_9$ | $-C_4H_9$ |
| | | | Degree of Substitution | 0.46 | 0.26 | 0.35 | 0.28 |
| | | Formula (2) | $R_1$ | - | - | - | - |
| | | | n | | | | |
| | | | A | - | - | - | - |
| | | | Degree of Substitution | - | - | - | - |
| | Cellulose Crystal Form | | | I | I | I | I |
| | Crystallinity, % | | | 48 | 60 | 49 | 35 |
| | Raw Material Cellulose | | | NBKP | LBKP | HYP | Powdery Cellulose A |
| | Content, Based on 100 Parts by Mass of Resin | | | 10 | 10 | 10 | 10 |
| Molded Article | Resin | | | Acrylic | Acrylic | Acrylic | Acrylic |
| | Mixing Method | | | Solution-mixing | Solution-mixing | Solution-mixincy | Solution-mixing |
| | Molding Method | | | Casting | Casting | Casting | Casting |
| | Storage Modulus, MPa | | | 30 (150°C) | 38 (150°C) | 30 (150°C) | 45 (150°C) |
| | CTE, ppm/K | | | 79 (50-100°C) | 85 (50-100°C) | 78 (50-100°C) | 101 (50-100°C) |

[Table 9]

Table 9

| | | Example | Comparative Example |
|---|---|---|---|
| | | 18 | 13 |
| | Average Fiber Size, μm | 25 | - |

(continued)

| | | | | Example | Comparative Example |
|---|---|---|---|---|---|
| | | | | 18 | 13 |
| Modified Cellulose Fibers | Substituent | Formula (1) | $R_1$ | $-C_4H_9$ | |
| | | | Degree of Substitution | 0.46 | - |
| | | Formula (2) | $R_1$ | - | - |
| | | | n | - | - |
| | | | A | - | - |
| | | | Degree of Substitution | - | - |
| | Cellulose Crystal Form | | | I | - |
| | Crystallinity, % | | | 48 | - |
| | Raw Material Cellulose | | | NBKP | - |
| | Content, Based on 100 Parts by Mass of Resin | | | 10 | 0 |
| | Resin | | | Polystyrene | Polystyrene |
| Molded Article | Mixing Method | | | Solution-mixing | Solution-mixing |
| | Molding Method | | | Casting | Casting |
| | Storage Modulus, MPa | | | 225 (120°C) | 0.12 (120°C) |
| | CTE, ppm/K | | | 43 (105-110°C) | 19,315 (105-110°C) |

It can be seen from Tables 1 to 4 that the modified cellulose fibers of the present invention have excellent dispersion stability in a low-polarity organic solvent and thickening actions. In addition, it can be seen from Tables 5 to 9 that high strength and dimensional stability can be exhibited in a widely applicable range regardless of the kinds of the resin and the methods of forming composites, by formation of the modified cellulose fibers with the resin. In particular, since the resin compositions obtained through melt-kneading at high temperatures show high strength (Table 5), the modified cellulose fibers of the present invention are suggested to have high thermal stability.

INDUSTRIAL APPLICABILITY

The modified cellulose fibers of the present invention have high dispersibility in the resin and can exhibit an effect of increasing strength, so that the modified cellulose fibers are suitable as various fillers, and the like. Also, the resin composition blended with the modified cellulose fibers can be suitably used in various industrial applications such as daily sundries, household electric appliance parts, wrapping materials for household electric appliance parts, automobile parts, and resins for three-dimensional modeling.

## Claims

**1.** Modified cellulose fibers having an average fiber size of 5 μm or more, wherein one or more substituents selected from substituents represented by the following general formula (1) and substituents represented by the following general formula (2):

$$-CH_2\text{-}CH(OH)\text{-}R_1 \qquad (1)$$

$$-CH_2-CH(OH)-CH_2-(OA)_n-O-R_1 \quad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
are bonded to cellulose fibers via an ether bond, wherein the modified cellulose fibers have a cellulose I crystal structure.

**2.** The modified cellulose fibers according to claim 1, which are modified cellulose fibers represented by the following general formula (3):

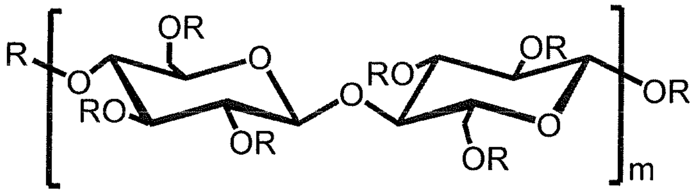
(3)

wherein R, which may be identical or different, is hydrogen, or a substituent selected from substituents represented by the general formula (1) defined above and substituents represented by the general formula (2) defined above; and m is an integer of 20 or more and 3,000 or less, with proviso that a case where all R's are simultaneously hydrogens is excluded.

**3.** The modified cellulose fibers according to claim 1 or 2, wherein the introduction ratio of the substituent or substituents selected from substituents represented by the general formula (1) and substituents represented by the general formula (2) is 0.001 mol or more and 1.5 mol or less, per mol of the anhydrous glucose unit.

**4.** The modified cellulose fibers according to any one of claims 1 to 3, wherein n is a number of 0 or more and 20 or less, and A is a linear or branched, divalent saturated hydrocarbon group having 2 or more carbon atoms and 3 or less carbon atoms, in the substituent represented by the general formula (2).

**5.** A method for producing modified cellulose fibers, the modified cellulose fibers having an average fiber size of 5 μm or more, wherein one or more substituents selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each $R_1$ in the general formula (1) and the general formula (2) is independently a linear or branched alkyl group having 3 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
are bonded to cellulose fibers via an ether bond, wherein the modified cellulose fibers have a cellulose I crystal structure,
**characterized in that** the method comprises introducing one or more compounds selected from nonionic alkylene oxide compounds having a total number of carbon atoms of 5 or more and 32 or less per molecule and nonionic glycidyl ether compounds having a total number of carbon atoms of 5 or more and 100 or less per molecule to a cellulose-based raw material having an average fiber size of 5 μm or more via an ether bond, in the presence of a base.

**6.** The method for producing modified cellulose fibers according to claim 5, wherein the base is one or more members selected from the group consisting of alkali metal hydroxides, alkaline earth metal hydroxides, primary to tertiary amines, quaternary ammonium salts, imidazoles and derivatives thereof, pyridine and derivatives thereof, and alkoxides.

**7.** The method for producing modified cellulose fibers according to claim 5 or 6, wherein the amount of the base is

0.01 equivalents or more and 10 equivalents or less, based on the anhydrous glucose unit in the cellulose-based raw material.

**8.** The method for producing modified cellulose fibers according to any one of claims 5 to 7, wherein the modified cellulose fibers are represented by the following general formula (3):

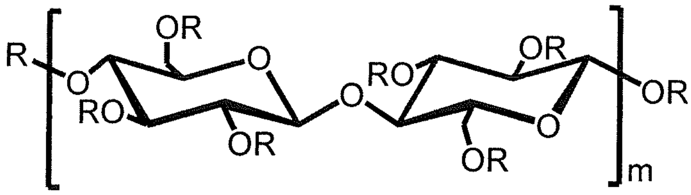

(3)

wherein R, which may be identical or different, is hydrogen, or a substituent selected from substituents represented by the general formula (1) defined above and substituents represented by the general formula (2) defined above; and m is an integer of 20 or more and 3,000 or less, with proviso that a case where all R's are simultaneously hydrogens is excluded.

**9.** The method for producing modified cellulose fibers according to any one of claims 5 to 8, wherein the introduction ratio of the substituent or substituents selected from substituents represented by the general formula (1) and substituents represented by the general formula (2) is 0.001 mol or more and 1.5 mol or less, per mol of the anhydrous glucose unit in the modified cellulose fibers.

**10.** The method for producing modified cellulose fibers according to any one of claims 5 to 9, wherein n is a number of 0 or more and 20 or less, and A is a linear or branched, divalent saturated hydrocarbon group having 2 or more carbon atoms and 3 or less carbon atoms, in the substituent represented by the general formula (2) in the modified cellulose fibers.

## INTERNATIONAL SEARCH REPORT

International application No. PCT/JP2016/076053

A. CLASSIFICATION OF SUBJECT MATTER
*C08B11/08*(2006.01)i

According to International Patent Classification (IPC) or to both national classification and IPC

B. FIELDS SEARCHED

Minimum documentation searched (classification system followed by classification symbols)
C08B11/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2014-218598 A (Bridgestone Corp., Oji Holdings Corp., Mitsubishi Chemical Corp.), 20 November 2014 (20.11.2014), paragraph [0099], preparation example 2 (Family: none) | 1-10 |
| X | JP 2009-209361 A (SE Tylose GmbH & Co. KG), 17 September 2009 (17.09.2009), claims; paragraphs [0068] to [0070], example 7 & US 2009/0221813 A1 claims; paragraphs [0105] to [0107], example 7 & EP 2098539 A1 & KR 10-2009-0094759 A | 1-10 |
| P,X | JP 2016-124974 A (Kao Corp.), 11 July 2016 (11.07.2016), claims; paragraph [0145], example 8 (Family: none) | 1-10 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 02 November 2016 (02.11.16) | 15 November 2016 (15.11.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002524618 A
- FR 2800378
- JP 2011016995 A
- JP 2011140738 A
- JP 2009261993 A


### Non-patent literature cited in the description


- SP Chi Kiso-Ouyo to Keisan Hoho (SP Values Basics and Applications and Method of Calculation). JOHOKIKO CO., LTD, 2005
- Polymer Handbook. Wiley-Interscience Publication, 1989
- Fifteenth Revised Japan Pharmacopeia (Section of Method of Analyzing Hydroxypropyl Cellulose). *Analytical Chemistry,* 1979, vol. 51 (13), 2172
- Mokushitsu Kagaku Jikken Manyuaru (Wood Science Experimental Manual). 199-200